(19) Europäisches Patentamt
European Patent Office
Office européen des brevets

(11) **EP 2 963 804 B1**

(12) **EUROPEAN PATENT SPECIFICATION**

(45) Date of publication and mention
of the grant of the patent:
**12.06.2019 Bulletin 2019/24**

(51) Int Cl.:
***H02P 21/00*** (2016.01)     ***H02P 27/04*** (2016.01)
***B60L 15/02*** (2006.01)

(21) Application number: **14756242.5**

(22) Date of filing: **29.01.2014**

(86) International application number:
**PCT/JP2014/051916**

(87) International publication number:
**WO 2014/132731 (04.09.2014 Gazette 2014/36)**

(54) **INVERTER DEVICE, CONSTRUCTION MACHINE, AND MOTOR CONTROL METHOD**

WECHSELRICHTER, BAUMASCHINE UND MOTORSTEUERUNGSVERFAHREN

DISPOSITIF ONDULEUR, ENGIN DE CHANTIER ET PROCÉDÉ DE COMMANDE DE MOTEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2013 JP 2013039133**

(43) Date of publication of application:
**06.01.2016 Bulletin 2016/01**

(73) Proprietor: **Hitachi Industrial Equipment Systems Co., Ltd.**
**Chiyoda-ku**
**Tokyo 101-0022 (JP)**

(72) Inventors:
• **TOBARI, Kazuaki**
**Tokyo 100-8280 (JP)**
• **KURAHASHI, Mitsuru**
**Tokyo 101-0022 (JP)**

(74) Representative: **Mewburn Ellis LLP**
**City Tower**
**40 Basinghall Street**
**London EC2V 5DE (GB)**

(56) References cited:
**JP-A- 2003 018 899     JP-A- 2003 189 652**
**JP-A- 2010 172 060     JP-A- 2011 078 277**
**JP-A- 2011 078 277     JP-A- 2012 218 498**
**JP-A- 2012 218 498**

• **FUNABASHI T ET AL: "An Adaptive Dead-Time Compensation Strategy for Voltage Source Inverter Fed Motor Drives", IEEE TRANSACTIONS ON POWER ELECTRONICS, INSTITUTE OF ELECTRICAL AND ELECTRONICS ENGINEERS, USA, vol. 20, no. 5, 1 September 2005 (2005-09-01), pages 1150-1160, XP011138699, ISSN: 0885-8993, DOI: 10.1109/TPEL.2005.854046**

**Description**

TECHNICAL FIELD

The present invention relates to an inverter device, to a construction machine, and to an electric motor control method.

BACKGROUND ART

The prior art control device for a permanent magnet motor described in Patent Document #1 is per se known. With this control device, second current command values for the d axis and the q axis of a rotating coordinate system are calculated so that the detected current values for these axes respectively agree with first current command values for these axes that are supplied from a higher level. And the output voltage of a power converter is controlled by vector calculation, using these second current command values and the electrical constants of the permanent magnet motor. By doing this, control at high accuracy is implemented in all speed regions, from the low speed region to the high speed region.

Patent Document #2 discloses an electric power steering control device capable of improving steering feeling by correcting a feedback gain of a d-axis or a d-axis voltage according to steering torque, steering speed or car speed so as to change the current response of the d-axis.

Patent Document #3 discloses a control system for a permanent magnet motor which suppresses an axial error during an accelerating/decelerating operation even in a permanent magnet motor with a large time constant. In particular, a reference axis correction unit, which can be considered as a particular stabilizing compensation unit, corrects the control axis used as reference of vector control using changed portion of electric current detected value which flows into the permanent magnet motor. A vector control unit carries out vector control of permanent magnet motor using the correction axis corrected by the reference axis correction unit.

Non-Patent Document #1 discloses an adaptive dead-time compensation strategy to obtain fundamental phase voltage for inverter fed vector controlled permanent magnet synchronous motor drives.

CITATION LIST

PATENT LITERATURE

Patent Document #1: Japanese Laid Open Patent Publication 2008-173006.
Patent Document #2: JP 2012 218498 A
Patent Document #3: JP 2010 172060 A

NON-PATENT LITERATURE

Non-Patent Document #1: Funabashi T et al, "An Adaptive Dead-Time Compensation Strategy for Voltage Source Inverter Fed Motor Drives", IEEE Transactions on Power Electronics, Institute of Electrical and Electronics Engineers, USA, vol. 20, no. 5 (2005-09-01)

SUMMARY

TECHNICAL PROBLEM

The control device described in the abovementioned Patent Document #1 is applied to control of a permanent magnet motor of the compact or mid sized type, and whose electrical time constant, as given by the ratio of the value of its inductance to the value of its resistance, is of the order of several ms to several tens of ms. It should be understood that, generally, a motor whose capacity is of the order of several hundred watts is considered as being a compact motor, while a motor whose capacity is of the order of several tens of kilowatts is considered as being a mid sized motor. However since, in the case of a large sized motor whose capacity is of the order of several hundreds of kilowatts or more, as compared to a compact or mid sized motor such as described above, the value of the inductance becomes higher while the value of the resistance becomes smaller, accordingly there is a tendency for the electrical time constant to become greater, and to be of the order of several hundreds of ms. As a result the problem arises that, due to an interference term loop between the d axis and the q axis created in the interior of the permanent magnet motor, the calculation period required for vector control becomes particularly long when the motor is rotating at high speed, and the loop gain for the rotational frequency component becomes extremely great, and this is undesirable. In order to suppress this loop gain and to perform stabilized motor control, it is necessary, along with making the calculation period for vector control sufficiently short, also to limit the response frequency of the current command value to a sufficiently low value.

In consideration of problems like that detailed above, the main object of the present invention is to implement stable motor control whose responsiveness is high, irrespective of the magnitudes of the electrical time constant of the motor and of the calculation period.

SOLUTION TO TECHNICAL PROBLEM

An inverter device for controlling a permanent magnet motor, according to the present invention, is set out in claim 1.

A construction machine, according to a further embodiment of the present invention, comprises:

an inverter device according to claim 1 or claim 2;
and a permanent magnet motor that is driven by AC power outputted from the inverter device.

An electric motor control method for controlling a permanent magnet motor, according to the present invention, is set out in claim 8.

ADVANTAGEOUS EFFECTS OF INVENTION

According to the present invention it is possible to implement stable motor control whose responsiveness is high, irrespective of the magnitudes of the electrical time constant of the motor and of the calculation period.

BRIEF DESCRIPTION OF DRAWINGS

[Fig. 1] A figure showing the relationship between calculation period and current ripple with a prior art control method;
[Fig. 2] A structural block diagram of an inverter device according to a first embodiment of the present invention;
[Fig. 3] A figure showing the vector control characteristics when a permanent magnet motor 1 whose resistance value R is comparatively large is driven according to the basic operation of a torque control system;
[Fig. 4] A figure showing the vector control characteristics when a permanent magnet motor 1 whose resistance value R is comparatively small is driven according to the basic operation of a torque control system;
[Fig. 5] A control block diagram for this vector control according to the basic operation of a torque control system;
[Fig. 6] A figure showing the discrete system open loop frequency characteristic for the control block diagram of Fig. 5, with a q axis current command value Iq* being the input and with a detected q axis current value Iqc being the output;
[Fig. 7] A control block diagram for a stabilizing compensation calculation unit 13;
[Fig. 8] A control block diagram for a motor section when a stabilizing compensation calculation unit 13 is employed;
[Fig. 9] A control block diagram for vector control according to a first embodiment of the present invention;
[Fig. 10] A figure showing the discrete system open loop frequency characteristic in the control block diagram of Fig. 9, with the q axis current command value Iq* being the input and with the detected q axis current value Iqc being the output;
[Fig. 11] A figure showing the vector control characteristic according to the control block diagram of Fig. 9;
[Fig. 12] A structural block diagram of an inverter device according to a second embodiment of the present invention;
[Fig. 13] A control block diagram for a stabilizing compensation calculation unit 13a;
[Fig. 14] A structural block diagram of an inverter device according to a third embodiment of the present invention;
[Fig. 15] A control block diagram for a stabilizing compensation calculation unit 13b;
[Fig. 16] A structural block diagram of an inverter device according to a fourth embodiment of the present invention;
[Fig. 17] A control block diagram for a stabilizing compensation calculation unit 13c;
[Fig. 18] A structural block diagram of an inverter device according to a fifth embodiment of the present invention;
[Fig. 19] A structural block diagram of an inverter device according to a sixth embodiment of the present invention; and
[Fig. 20] A block diagram showing an example of the structure of a construction machine in which motor control is performed by using an inverter device to which the present invention has been applied.

DESCRIPTION OF EMBODIMENTS

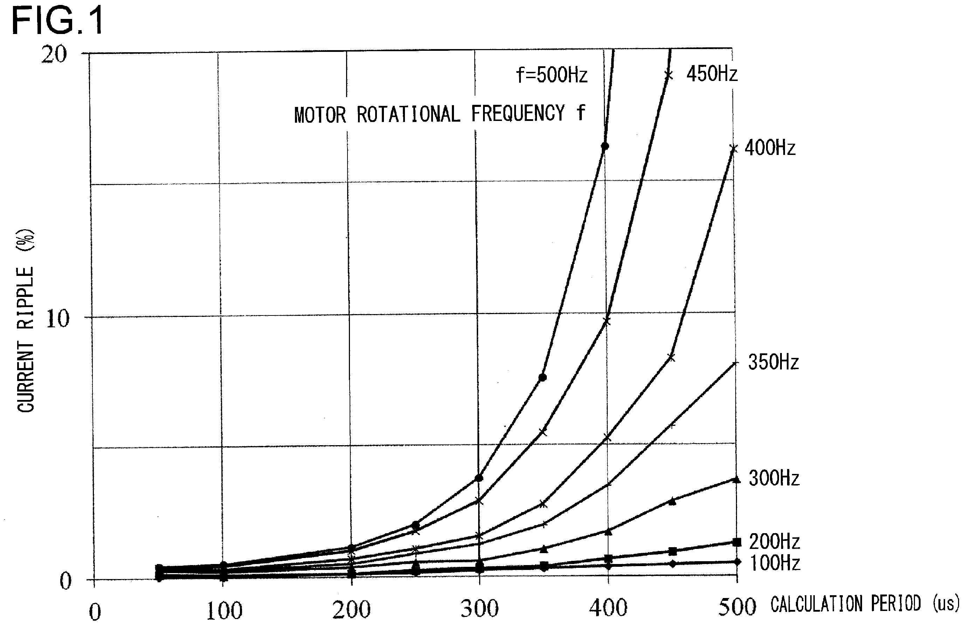

Before explaining various embodiments of the present invention, the current ripple when a prior art control method is employed will be explained. Fig. 1 is a figure showing the relationship between calculation period and current ripple with a prior art control method. In Fig. 1, for each of the rotation frequencies 100 Hz, 200 Hz, 300 Hz, 350 Hz, 400 Hz, 450 Hz, and 500 Hz of a permanent magnet motor, in the state in which the response frequency of the current command value is limited to being no greater than a fixed value, the magnitude of current ripple for the q axis is shown when the calculation period is changed between 50 μs and 500 μs.

From Fig. 1 it will be understood that, the longer the calculation period for control becomes, the greater the current ripple becomes. Moreover, it will be understood that this tendency of the current ripple appears more prominently, the higher is the rotational frequency of the motor.

Next, various embodiments of the present invention will be explained. In the following, the details of various embodiments of the present invention will be explained with reference to the drawings.

Embodiment #1

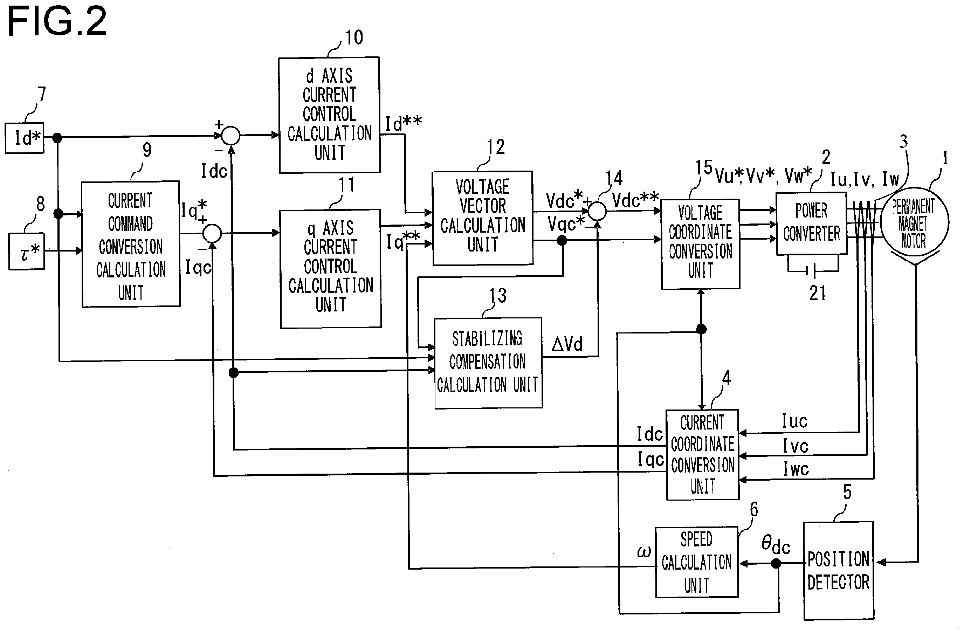

Fig. 2 is a structural block diagram of an inverter device according to a first embodiment of the present invention. The inverter device shown in Fig. 2 is for controlling a permanent magnet motor 1, and comprises a power converter 2, a current detector 3, a current coordinate conversion unit 4, a position detector 5, a speed calculation unit 6, a d axis current command setting unit 7, a torque command setting unit 8, a current command conversion calculation unit 9, a d axis current control calculation unit 10, a q axis current control calculation unit 11, a voltage vector calculation unit 12, a stabilizing compensation calculation unit 13, a correction calculation unit 14, and a voltage coordinate conversion unit 15.

The permanent magnet motor 1 is driven by AC power outputted from the power converter 2, and outputs motor torque by combining a torque component due to the magnetic flux of a permanent magnet and a torque component due to the inductance of an armature winding.

The power converter 2 is a device that converts DC power supplied from a DC power supply 21 to AC power that is outputted to the permanent magnet motor 1, and has a per se known circuit structure in which switching elements and diodes and so on are combined. Using this circuit structure, and on the basis of the DC voltage of the DC power supply 21, the power converter 2 outputs three phase AC voltages corresponding to three phase AC voltage command values Vu*, Vv*, and Vw* outputted from the voltage coordinate conversion unit 15. Due to this, the output voltage and the rotational frequency of the permanent magnet motor 1 are controlled, and the permanent magnet motor 1 is driven.

The current detector 3 detects the three phase AC currents Iu, Iv, and Iw flowing in the permanent magnet motor 1, and outputs their detected values Iuc, Ivc, and Iwc to the current coordinate conversion unit 4.

The current coordinate conversion unit 4 outputs a detected d axis current value Idc and a detected q axis current value Iqc on the basis of the detected three phase AC current values Iuc, Ivc, and Iwc inputted from the current detector 3, and of a detected position value θdc inputted from the position detector 5.

As explained above, the d axis current and the q axis current flowing in the permanent magnet motor 1 are detected by the current detector 3 and the current coordinate conversion unit 4, and the detected d axis current value Idc and the detected q axis current value Iqc corresponding to these detected results are outputted.

The position detector 5 is a resolver or an encoder that detects the position θ (i.e. the rotational angle) of the permanent magnet motor 1, and outputs the detected position value θdc corresponding to this detected result.

The speed calculation unit 6 calculates the rotational angular speed of the permanent magnet motor 1 on the basis of the detected position value θdc outputted from the position detector 5, and outputs the result of this calculation as a detected angular speed value ω.

The d axis current command setting unit 7 outputs a d axis current command value Id* on the basis of a command signal that is inputted from a higher ranking controller (not shown in the figures). This d axis current command value Id* has a value that is zero or negative, in other words has a value that is less than or equal to zero.

The torque command setting unit 8 outputs a torque command value τ* on the basis of the command signal described above. This torque command value τ* may have a zero value, a positive value, or a negative value; in other words, it has a value in a predetermined range that includes zero.

The current command conversion calculation unit 9 calculates and outputs a q axis current command value Iq* on the basis of the d axis current command value Id* from the d axis current command setting unit 7 and the torque command value τ* from the torque command setting unit 8. In this calculation, the command conversion calculation unit 9 employs electrical constants Ld, Lq, and Ke of the permanent magnet motor 1 that have been set in advance. It should be understood that Ld denotes the d axis inductance, Lq denotes the q axis inductance, and Ke denotes the back electromotive force constant.

The difference between the d axis current command value Id* and the detected d axis current value Idc is inputted to the d axis current control calculation unit 10. In the following, this difference will be termed the "d axis current

**4**

deviation". The d axis current control calculation unit 10 calculates a second d axis current command value Id** on the basis of this d axis current deviation that has been inputted, and outputs this value Id** to the voltage vector calculation unit 12.

And the difference between the q axis current command value Iq* and the detected q axis current value Iqc is inputted to the q axis current control calculation unit 11. In the following, this difference will be termed the "q axis current deviation". The q axis current control calculation unit 11 calculates a second q axis current command value Iq** on the basis of this q axis current deviation that has been inputted, and outputs this value Iq** to the voltage vector calculation unit 12.

The voltage vector calculation unit 12 calculates and outputs a d axis voltage command value Vdc* and a q axis voltage command value Vqc* on the basis of the second d axis current command value Id** inputted from the d axis current control calculation unit 10, the second q axis current command value Iq** inputted from the q axis current control calculation unit 11, and the detected angular speed value ω from the speed calculation unit 6. In this calculation, the voltage vector calculation unit 12 uses electrical constants R, Ld, Lq, and Ke of the permanent magnet motor that have been determined in advance. It should be understood that R denotes the value of the resistance. Moreover, as previously described, Ld, Lq, and Ke are the d axis and q axis inductances and the back electromotive force constant.

The stabilizing compensation calculation unit 13 calculates a correction amount for the d axis voltage command value Vdc* on the basis of the q axis voltage command value Vqc* from the voltage vector calculation unit 12 and the d axis current command value Id* and the detected d axis current value Idc described above. As will be explained subsequently in detail, this correction amount is a value that suppresses divergence of the q axis current Iq by reducing the q axis current control gain at the rotational frequency component of the permanent magnet motor 1, and thereby improves the control characteristic. And the unit 13 outputs a stabilization compensation signal ΔVd that corresponds to the calculated correction amount.

The correction calculation unit 14 corrects the d axis voltage command value Vdc* from the voltage vector calculation unit 12 on the basis of the correction amount calculated by the stabilizing compensation calculation unit 13. In concrete terms, the unit 14 corrects the d axis voltage command value Vdc* by subtracting, from this d axis voltage command value Vdc*, the correction amount specified by the stabilization compensation signal ΔVd outputted from the stabilizing compensation calculation unit 13. And the unit 14 outputs a d axis voltage command value Vdc** after amendment corresponding to this corrected result to the voltage coordinate conversion unit 15.

The voltage coordinate conversion unit 15 outputs the three phase AC voltage command values Vu*, Vv*, and Vw* to the power converter 2 on the basis of the d axis voltage command value Vdc** after amendment inputted from the correction calculation unit 14, the q axis voltage command value Vqc* inputted from the voltage vector calculation unit 12, and the detected position value θdc. DC power is converted to AC power by the power converter 2 operating according to these voltage command values Vu*, Vv*, and Vw*. In other words, conversion from DC power to AC power is performed by the voltage coordinate conversion unit 15 and the power converter 2 on the basis of the d axis voltage command value Vdc** after amendment, the q axis voltage command value Vqc*, and the detected position value θdc.

Next, the details of the stabilizing compensation calculation unit 13 will be explained, this being the distinguishing portion of the present invention. Initially, the basic operation of a torque control system that is not provided with any such stabilizing compensation calculation unit 13, as is the case with a prior art inverter device, will be explained using the structures shown in Fig. 2, with the exception of the stabilizing compensation calculation unit 13.

As previously described, using the electrical constants Ld, Lq, and Ke of the permanent magnet motor 1, the current command conversion calculation unit 9 calculates the q axis current command value Iq* on the basis of the d axis current command value Id* and the torque command value τ*. This calculation is performed according to Equation (1) below. It should be understood that, in Equation (1), Pm is the number of pairs of poles of the permanent magnet motor 1.

Equation (1)

$$Iq^* = \frac{\tau^*}{\frac{3}{2} \cdot Pm \cdot \left\{Ke + (Ld - Lq) \cdot Id^*\right\}} \quad \cdots (1)$$

On the basis of the d axis current deviation (Id* - Idc) and the q axis current deviation (Iq* - Iqc) that are inputted to each of them respectively, the d axis current control calculation unit 10 and the q axis current control calculation unit 11 perform proportional calculation and integration calculation in order to track the detected d axis current value Idc to the d axis current command value Id* and to track the detected q axis current value Iqc to the q axis current command value Iq*, respectively. In concrete terms, the second d axis current command value Id** for tracking the detected d axis current value Idc to the d axis current command value Id* and the second q axis current command value Iq** for tracking the detected q axis current value Iqc to the q axis current command value Iq* are calculated by the d axis current control calculation unit 10 and the q axis current control calculation unit 11 respectively, according to Equations (2) given below:
Equations (2)

$$\begin{bmatrix} Id^{**} = (Id^{*} - Idc) \cdot (Kpd + \dfrac{Kid}{s}) \\[2ex] Iq^{**} = (Iq^{*} - Iqc) \cdot (Kpq + \dfrac{Kiq}{s}) \\[2ex] Kpd = \omega_{ACR} \cdot Ld / R \\[2ex] Kid = \omega_{ACR} \\[2ex] Kpq = \omega_{ACR} \cdot Lq / R \\[2ex] Kiq = \omega_{ACR} \end{bmatrix} \quad \cdots (2)$$

It should be understood that, in Equations (2), the q axis current command value Iq* is that given by Equation (1) above, and ωACR denotes the response angular frequency of the current control (in rad/sec). Moreover, Kpd and Kid respectively denote the proportional gain and the integration gain of the d axis current control, while Kpq and Kiq respectively denote the proportional gain and the integration gain of the q axis current control.

Using the second d axis current command value Id** and the second q axis current command value Iq** respectively calculated according to Equations (2) above by the d axis current control calculation unit 10 and by the q axis current control calculation unit 11, and the electrical constants R, Ld, Lq, and Ke of the permanent magnet motor 1 and the detected angular speed value co, the voltage vector calculation unit 12 calculates the d axis voltage command value Vdc* and the q axis voltage command value Vqc* according to Equations (3) given below:
Equations (3)

$$\begin{bmatrix} Vdc^* = R \cdot Id^{**} - \omega \cdot Lq \cdot Iq^{***} \\ Vqc^* = R \cdot Iq^{**} - \omega \cdot Ld \cdot Id^{***} + \omega \cdot Ke \\ Id^{***} = \dfrac{1}{1 + Ld/R \cdot s} \cdot Id^{**} \\ Iq^{***} = \dfrac{1}{1 + Lq/R \cdot s} \cdot Iq^{**} \end{bmatrix} \quad \cdots(3)$$

On the basis of the detected position value θdc, the voltage coordinate conversion unit 15 coordinate converts the d axis voltage command value Vdc* and the q axis voltage command value Vqc* calculated by Equations (3) described above according to Equation (4) given below, so as to obtain the three phase AC voltage command values Vu*, Vv*, and Vw*.
Equation (4)

$$\begin{bmatrix} Vu^* \\ Vv^* \\ Vw^* \end{bmatrix} = \begin{bmatrix} 1 & 0 \\ 1/2 & \sqrt{3}/2 \\ -1/2 & -\sqrt{3}/2 \end{bmatrix} \cdot \begin{bmatrix} \cos(\theta dc) & -\sin(\theta dc) \\ \sin(\theta dc) & \cos(\theta dc) \end{bmatrix} \begin{bmatrix} Vdc^* \\ Vqc^* \end{bmatrix} \quad \cdots(4)$$

Moreover, on the basis of the detected position value θdc, the current coordinate conversion unit 4 coordinate converts the three phase AC detected current values Iuc, Ivc, and Iwc according to Equation (5) below, and obtains the detected d axis current value Idc and the detected q axis current value Iqc.
Equation (5)

$$\begin{bmatrix} Idc \\ Iqc \end{bmatrix} = \frac{2}{3} \cdot \begin{bmatrix} \cos(\theta dc) & \sin(\theta dc) \\ -\sin(\theta dc) & \cos(\theta dc) \end{bmatrix} \begin{bmatrix} 1 & -1/2 & -1/2 \\ 0 & \sqrt{3}/2 & -\sqrt{3}/2 \end{bmatrix} \cdot \begin{bmatrix} Iuc \\ Ivc \\ Iwc \end{bmatrix} \quad \cdots(5)$$

The details described above constitute the basic operation of the torque control system.

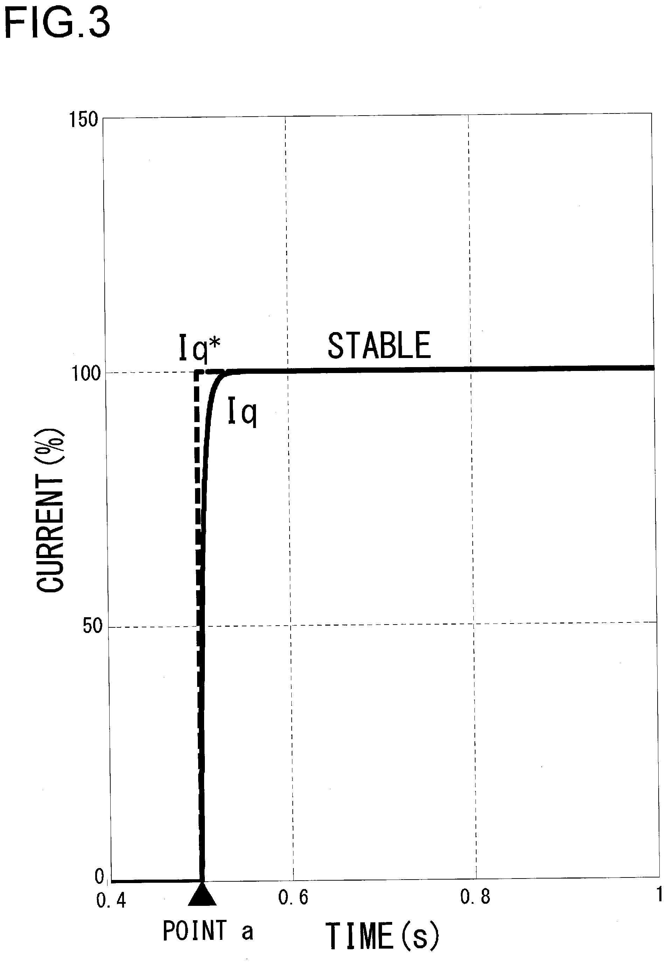

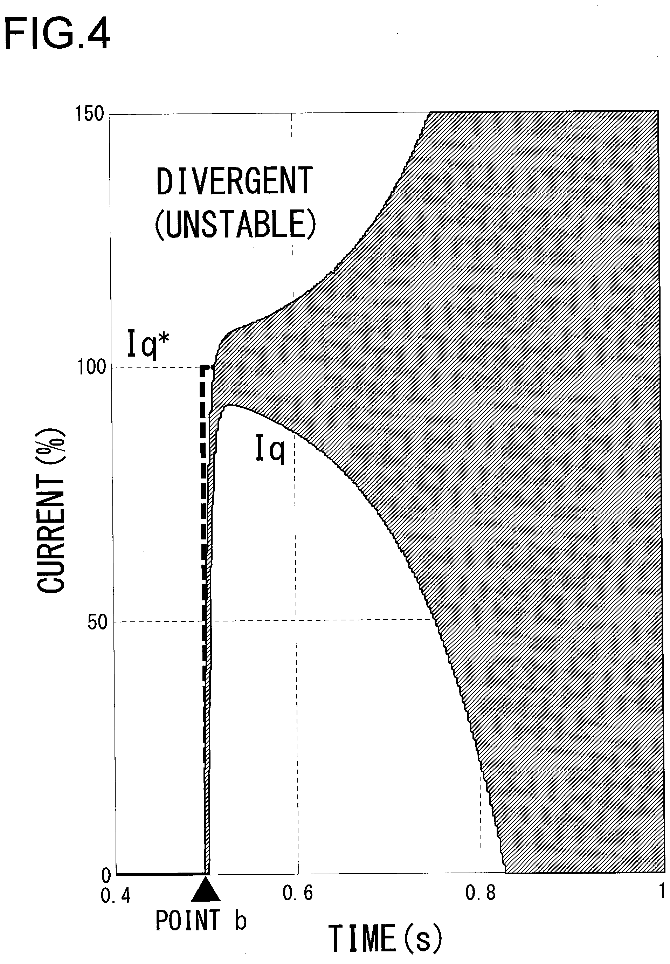

Figs. 3 and 4 are figures showing the vector control characteristics when the permanent magnet motor 1 is driven according to the basic operation of a torque control system such as that explained above. The vector control characteristics shown in these figures show the way in which the q axis current Iq changes with respect to the q axis current command value Iq* when the control calculation period is set at 500 μs and the permanent magnet motor 1 is driven at a rotational frequency of 333 Hz.
Fig. 3 shows the results of simulation of the vector control characteristic when the resistance value R of the permanent magnet motor 1 is comparatively large (R=200 mΩ). It will be understood that, according to the vector control characteristic shown in this Fig. 3, when the q axis current command value Iq* is increased stepwise to reach the value of 100% at the point a in the figure , in response the q axis current Iq tracks stably.
On the other hand, Fig. 4 shows the results of simulation of the vector control characteristic when the value R of the resistance of the permanent magnet motor 1 is comparatively small (R=10 mΩ). It will be understood that, according to the vector control characteristic shown in this Fig. 4, when the q axis current command value Iq* is increased stepwise to reach the value of 100% at the point b in the figure in a similar manner to the case in Fig. 3, in response the q axis current Iq does not track stably, but diverges. In other words it will be understood that, when the value R of the resistance of the permanent magnet motor 1 is small, the control system becomes unstable. It should be understood that in Fig. 4 the dark portion of the q axis current Iq line demonstrates how the q axis current Iq oscillates up and down at a short period.

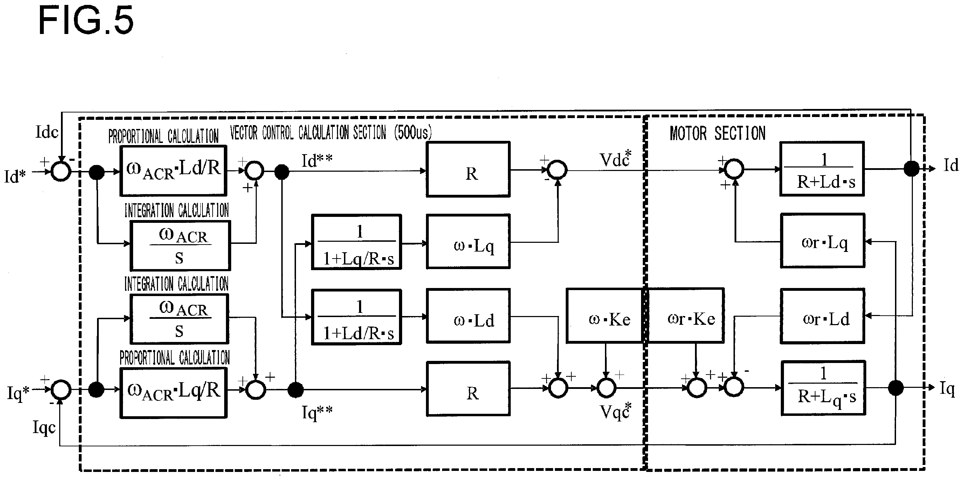

Fig. 5 is a control block diagram for the vector control according to the basic operation of the torque control system explained above. Principally, this control block diagram is made up of a vector control calculation section that corresponds to the d axis current control calculation unit 10, the q axis current control calculation unit 11 and the voltage vector calculation unit 12 of FIG. 2, and a motor section that corresponds to the permanent magnet motor 1, the power converter 2, the current coordinate conversion unit 4 and the voltage coordinate conversion unit 15 of FIG. 2. It should be understood that, in Fig. 5, the calculation period of the vector control calculation section is 500 $\mu$s. Moreover, $\omega$r included in the motor section control block denotes the rotational angular frequency (in rad/sec) of the permanent magnet motor 1.

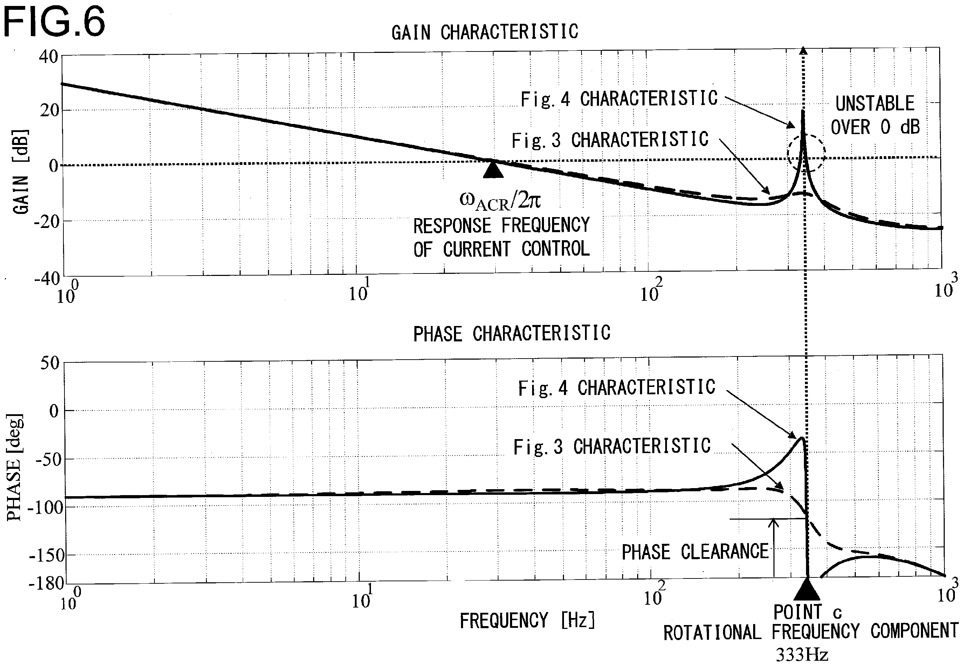

And Fig. 6 is a figure showing, for the control block diagram of Fig. 5, the discrete system open loop frequency characteristic with the q axis current command value Iq* being taken as the input and with the detected q axis current value Iqc being taken as the output. In Fig. 6 the gain characteristic, in other words the frequency characteristic of the gain, is shown in the upper portion, while the phase characteristic, in other words the frequency characteristic of the phase, is shown in the lower portion. It should be understood that, in the calculation of the frequency characteristic shown in Fig. 6, it is assumed that the current detection processing by the current detector 3 and the current coordinate conversion unit 4 is performed upon a sufficiently rapid cycle, and no consideration is given to delay due to this current detection processing.

The gain characteristic and the phase characteristic when the value R of the resistance of the permanent motor 1 is 200 m$\Omega$ are shown in Fig. 6 by the broken lines. These frequency characteristics correspond to the vector control characteristic of Fig. 3. Moreover, the gain characteristic and the phase characteristic when the value R of the resistance of the permanent motor 1 is 10 m$\Omega$ are shown in Fig. 6 by the solid lines. These frequency characteristics correspond to the vector control characteristic of Fig. 4.

When the resistance value R is 200 m$\Omega$, from the phase characteristic shown by the broken line in the lower portion of Fig. 6, it will be understood that the phase clearance from -180° is large in the vicinity of the point where the rotational frequency component of the permanent magnet motor 1 is 333 Hz (i.e., the point c in the figure). Moreover, from the gain characteristic shown by the broken line in the upper portion of Fig. 6, it will be understood that the gain at this time is 0 dB or less. Accordingly, it will be understood that the control system is stable. On the other hand, when the resistance value R is 200 m$\Omega$, from the phase characteristic shown by the solid line in the lower portion of Fig. 6, it will be understood that the phase becomes -180° at the point c in the figure. Moreover, from the gain characteristic shown by the broken line in the upper portion of Fig. 6, it will be understood that the gain at this time is 0 dB or greater. Accordingly, it will be understood that the control system is unstable. This type of frequency characteristic also agrees with the simulation results for vector control characteristic shown in Figs. 3 and 4.

As has been explained above, when the resistance value R of the permanent magnet motor 1 is small, the control system becomes unstable, and it becomes impossible to suppress current ripple sufficiently. This demonstrates that, in the control block diagram of Fig. 5, it is not possible for the vector control calculation section to ensure compensation of the gain characteristic of the interference loop between the d axis and the q axis included in the motor section. Due to this, in order to control a permanent magnet motor 1 in a stable manner in the high speed region with a control system for an inverter device according to the prior art, it has been necessary to keep the current control response low, in other words to keep the response frequency of current control low.

On the other hand, with the present invention, the stabilizing compensation calculation unit 13 is provided in order to suppress current ripple by controlling the permanent magnet motor 1 in a stable manner in the high speed region. In the following, the operation of this stabilizing compensation calculation unit 13 will be explained.

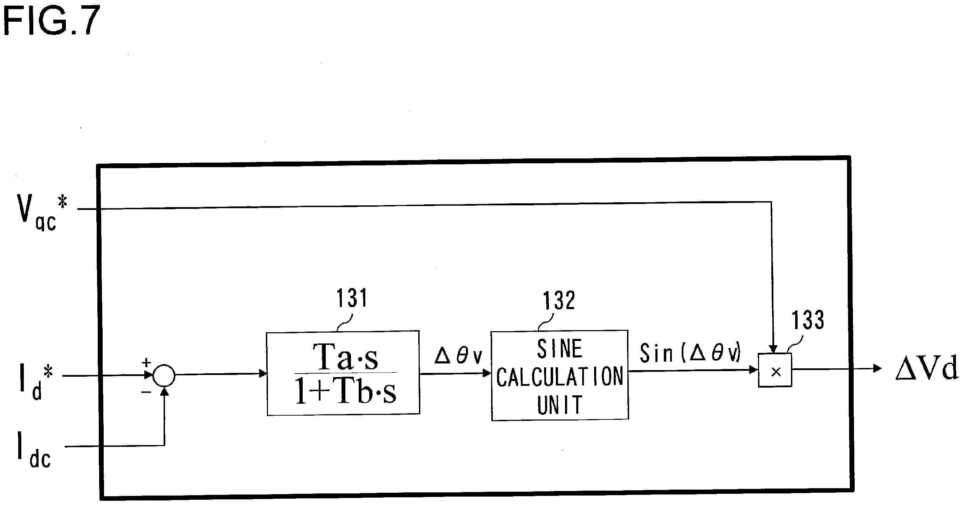

Fig. 7 is a control block diagram for the stabilizing compensation calculation unit 13. The stabilizing compensation calculation unit 13 comprises an inexact differential calculation unit 131, a sine calculation unit 132, and a multiplication unit 133.

The differential (Id* - Idc) between the d axis current command value Id* and the detected d axis current value Idc, in other words the previously described d axis current deviation, is inputted to the inexact differential calculation unit 131. And, using this d axis current deviation, the inexact differential calculation unit 131 calculates and outputs a phase compensation signal $\Delta\theta v$ according to the calculation shown in the following Equation (6). It should be understood that, in Equation (6), Ta denotes the differential time constant (i.e. the differential gain), while Tb denotes the primary (first order) delay time constant.

Equation (6)

$$\Delta\theta v = \frac{Ta \cdot s}{1 + Tb \cdot s} \cdot (Id^* - Idc) \quad \cdots(6)$$

In Equation (6) given above, Ta and Tb can be expressed by the following Equations (7), using the electrical constants Ld, Lq, Ke, and R of the permanent magnet motor 1. It should be understood that, in Equations (7), $\zeta c$ denotes a compensation attenuation coefficient that corresponds to a fixed component of an attenuation coefficient $\zeta$ that will be described hereinafter. This compensation attenuation coefficient $\zeta c$ may be set in advance to any desired value. Equations (7)

$$\begin{bmatrix} Ta = \dfrac{2 \cdot \zeta_c \cdot Ld \cdot Lq}{Ke \cdot R} \\ \\ Tb = \dfrac{Lq}{R} \end{bmatrix} \quad \cdots(7)$$

The sine calculation unit 132 calculates and outputs the value $\sin(\Delta\theta v)$ of the sine of the phase compensation signal $\Delta\theta v$ outputted from the inexact differential calculation unit 131. And the multiplication unit 133 calculates the product of this value $\sin(\Delta\theta v)$ obtained by the sine calculation unit 132 and the q axis voltage command value $Vqc^*$ as being the correction amount, and outputs the stabilization compensation signal $\Delta Vd$ that corresponds to this calculated result.

By a calculation such as that explained above being performed by the control blocks of Fig. 7, the stabilizing compensation calculation unit 13 is able to calculate the correction amount for reducing the current control gain at the rotational frequency component of the permanent magnet motor 1, and is able to output the result of this calculation as the stabilization compensation signal $\Delta Vd$.

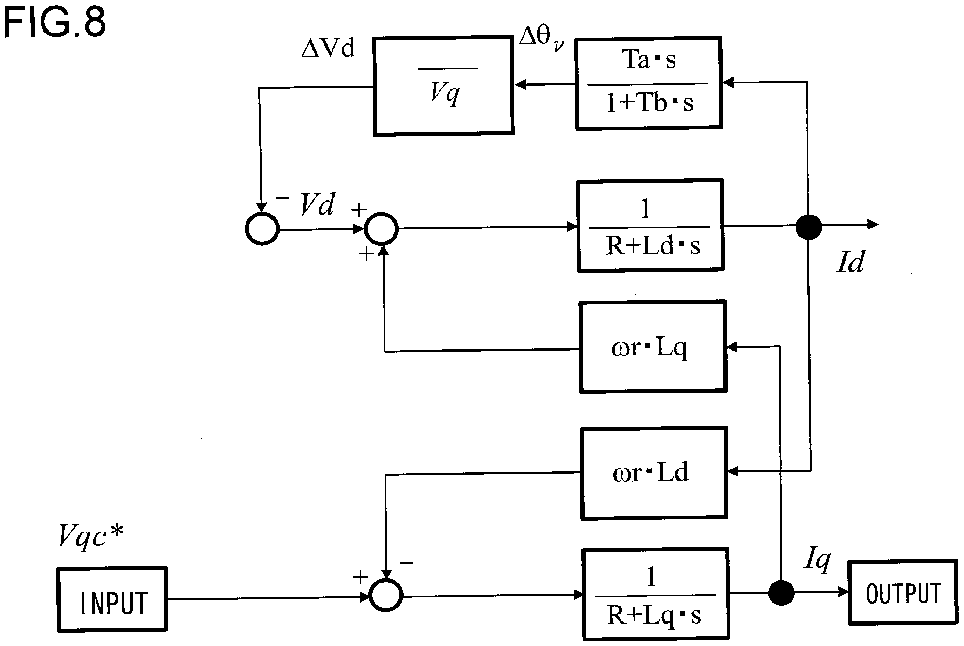

Next, the control theory when the stabilizing compensation calculation unit 13 is used will be explained. Fig. 8 is a control block diagram for the motor section when the stabilizing compensation calculation unit 13 is employed. This control block diagram is constructed by adding control blocks corresponding to the stabilizing compensation calculation unit 13 to the motor section of the control block diagram for the basic operation of the torque control system shown in Fig. 5.

The control block diagram of Fig. 8 inputs the q axis voltage command value $Vqc^*$ and outputs the q axis current Iq. The closed loop transfer function $G\theta(s)$ for the control system from this input to this output can be expressed as the following Equation (8):
Equation (8)

$$G\theta(s) = \frac{R^2 \cdot \left\{ \dfrac{Ld \cdot Lq}{R^2} \cdot s^2 + \dfrac{R \cdot (Ld + Lq) + \omega r \cdot 2 \cdot \zeta_c \cdot Ld \cdot Lq}{R^2} \cdot s + 1 \right\}}{(R^2 + \omega r^2 \cdot Ld \cdot Lq) \left\{ \dfrac{Ld \cdot Lq}{R^2 + \omega r^2 \cdot Ld \cdot Lq} \cdot s^2 + \dfrac{R \cdot (Ld + Lq) + \omega r \cdot 2 \cdot \zeta_c \cdot Ld \cdot Lq}{R^2 + \omega r^2 \cdot Ld \cdot Lq} \cdot s + 1 \right\}} \quad \cdots(8)$$

Here, in the high speed region in which the rotational speed of the permanent magnet motor 1 is sufficiently great, the relationship shown in Equation (9) below becomes valid:
Equation (9)

$$R^2 << \omega r^2 \cdot Ld \cdot Lq \quad \cdots(9)$$

When Equation (9) holds, then Equation (8) given above may be approximated as the following Equation (10):
Equation (10)

$$G\theta(s) \approx \frac{R^2 \cdot \left\{ \frac{Ld \cdot Lq}{R^2} \cdot s^2 + \left( \frac{R \cdot (Ld + Lq)}{R^2} \cdot \frac{\omega r \cdot 2 \cdot \zeta_c \cdot Ld \cdot Lq}{R^2} \right) \cdot s + 1 \right\}}{\omega r^2 \cdot Ld \cdot Lq \cdot \left\{ \frac{1}{\omega r^2} \cdot s^2 + \left( \frac{R \cdot (Ld + Lq)}{\omega r^2 \cdot Ld \cdot Lq} + \frac{2 \cdot \zeta_c}{\omega r} \right) \cdot s + 1 \right\}} \quad \cdots (10)$$

Since the denominator of Equation (10) includes a quadratic (second order) delay term, accordingly it will be understood that the gain of the transfer function $G\theta(s)$ changes according to the rotational angular frequency $\omega r$ of the permanent magnet motor 1. This is the root cause of deterioration of the control characteristic in the high speed region.
Here, the general formula for the quadratic delay term can be given as Equation (11) below. In this Equation (11), $\omega n$ denotes the intrinsic angular frequency of the control system, while $\zeta$ denotes the attenuation coefficient.
Equation (11)

$$G(s) = \frac{1}{\frac{1}{\omega n^2} \cdot s^2 + \frac{2 \cdot \zeta}{\omega n} \cdot s + 1} \quad \cdots (11)$$

When the quadratic delay term (i.e. the denominator) of Equation (10) described above is substituted into Equation (11) described above, the following Equation (12) is obtained. In Equation (12), $\zeta m$ denotes the fluctuation component of the attenuation coefficient $\zeta$, and this changes according to the electrical constants of the permanent magnet motor 1 and according to the rotational angular frequency $\omega r$ of the permanent magnet motor 1. On the other hand $\zeta c$, which corresponds to the fixed component of the attenuation coefficient $\zeta$, denotes the compensation attenuation coefficient that is used in the calculation performed by the inexact differential calculation unit 131 of the compensation calculation unit 13, as described above. This compensation attenuation coefficient $\zeta c$ is a constant fixed value, and is independent of the state of the permanent magnet motor 1.
Equation (12)

$$\begin{pmatrix} \omega n = \omega r \\ \zeta_m = \frac{1}{2} \cdot \frac{(Ld + Lq) \cdot R}{\omega r \cdot Ld \cdot Lq} \\ \zeta = \zeta_m + \zeta_c \end{pmatrix} \quad \cdots (12)$$

According to Equation (12) it will be understood that, if the resistance value R is small or the rotational angular frequency $\omega r$ is great, then the value of the fluctuation component $\zeta m$ becomes small, and corresponding thereto the attenuation coefficient $\zeta$ also becomes small. When the attenuation coefficient $\zeta$ becomes less than some predetermined limit value, then, as previously described, the control system becomes unstable, and it becomes impossible to suppress current ripple.
Thus, with the first embodiment of the present invention, it is arranged to prevent the attenuation coefficient $\zeta$ from becoming less than the limit value by setting the compensation attenuation coefficient $\zeta c$ with the stabilizing com-

pensation calculation unit 13 to an appropriate value in advance, for example to a value of 0.5 or greater. In other words, even in a case such as when the value of the fluctuation component ζm becomes extremely small in relation to the value of the resistance R or the value of the rotational angular frequency ωr so that the relationship ζc?»?ζm holds, it is still ensured that the attenuation coefficient ζ, which includes the compensation attenuation coefficient ζc, is prevented from becoming less than the limit value. Due to this, it is possible to stabilize the control so that the attenuation coefficient ζ is always greater than or equal to the limit value, irrespective of the value of the resistance R or the value of the rotational angular frequency ωr.

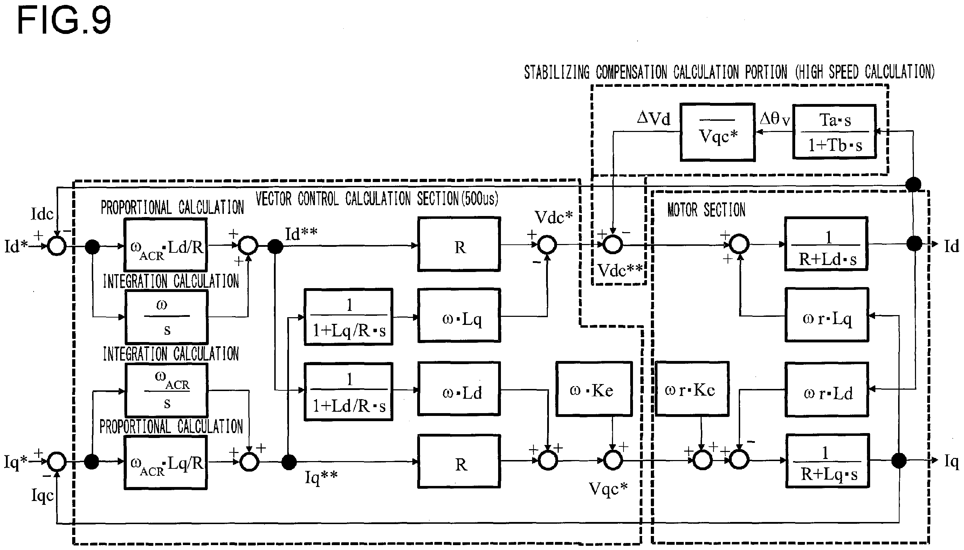

Fig. 9 is a control block diagram for the vector control according to the first embodiment of the present invention explained above. This control block diagram is constructed by adding a stabilizing compensation calculation portion corresponding to the stabilizing compensation calculation unit 13 between a vector control calculation section and a motor section that are similar to those of the control block diagram of Fig. 5. It should be understood that it is desirable for this stabilizing compensation calculation portion to be capable of performing its calculation at high speed in a calculation period shorter than 500 μs, which is the calculation period of the vector control calculation section.

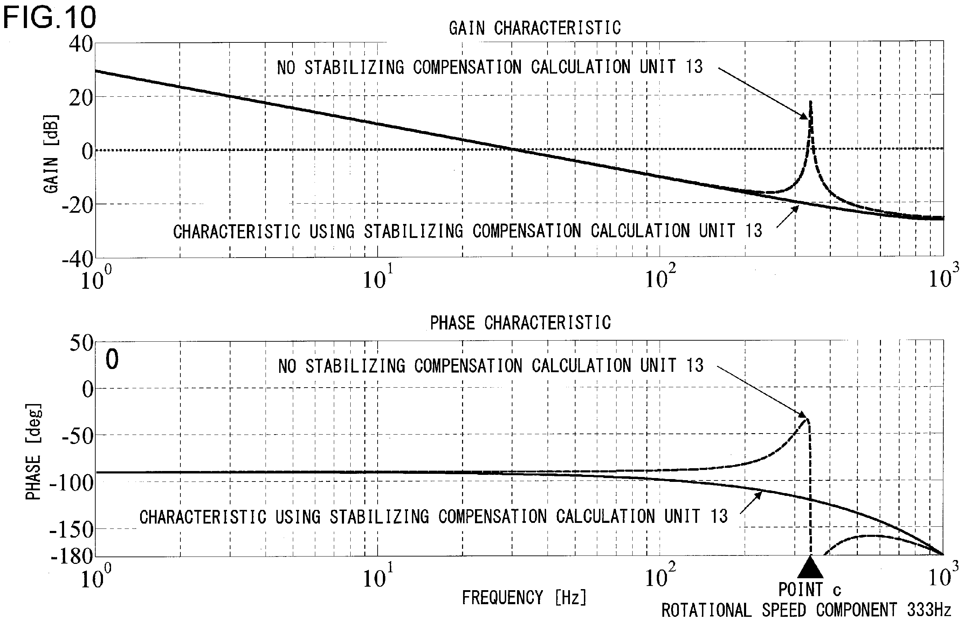

Fig. 10 is a figure showing the discrete system open loop frequency characteristic for the control block diagram of Fig. 9, with the q axis current command value Iq* being the input and with the detected q axis current value Iqc being the output. In Fig. 10, in a similar manner to the case for Fig. 6, the gain characteristic, in other words the frequency characteristic of the gain, is shown in the upper portion, while the phase characteristic, in other words the frequency characteristic of the phase, is shown in the lower portion. It should be understood that these frequency characteristics are shown for a case in which the value of the resistance R of the permanent magnet motor 1 is 10 mΩ.

The gain characteristic and the phase characteristic when no stabilizing compensation calculation unit 13 is employed are shown in Fig. 10 by the broken lines, while the gain characteristic and the phase characteristic when the stabilizing compensation calculation unit 13 is employed are shown in Fig. 10 by the solid lines. It should be understood that the gain characteristic and the phase characteristic shown by the broken lines are the same as those shown by the solid lines in Fig. 6.

When a comparison is made with the gain characteristics shown in the upper portion of Fig. 6, it will be understood that, when the stabilizing compensation calculation unit 13 is employed, the gain in the vicinity of 333 Hz (i.e., the point c in the figure), which is the rotational frequency component of the permanent magnet motor 1 is reduced to 0 dB or less, and thus approaches the ideal gain characteristic which has a constant slope. Moreover, when a comparison is made with the phase characteristics shown in the lower portion of Fig. 6, it will be understood that, when the stabilizing compensation calculation unit 13 is employed, it is possible to avoid the phase at the point c in the figure becoming -180°.

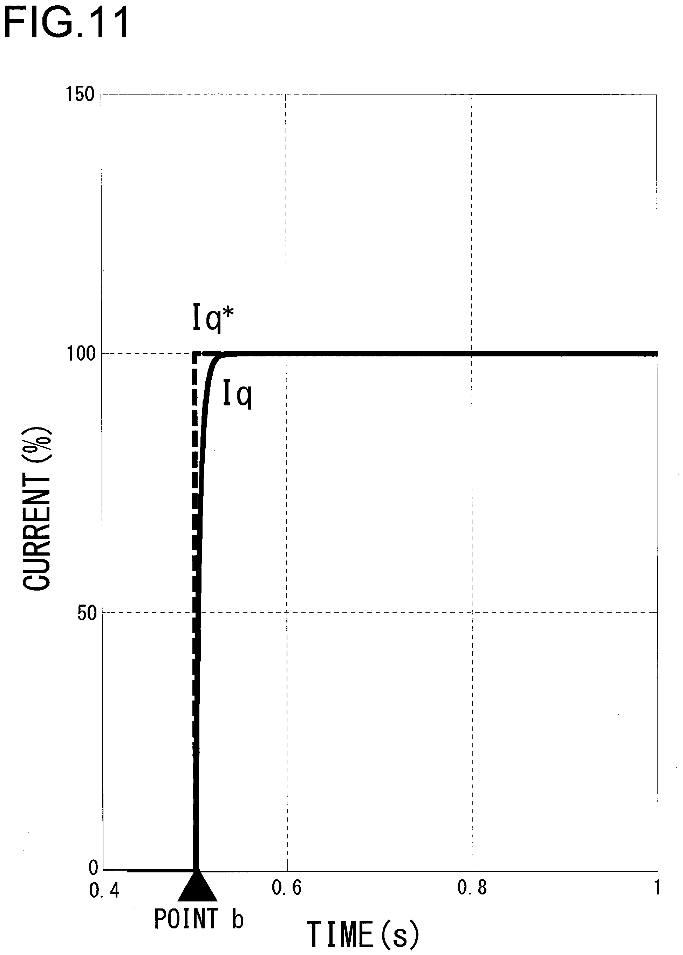

Fig. 11 is a figure showing the vector control characteristic according to the control block diagram of Fig. 9. The simulation results for the vector control characteristic when the value of the resistance R is 10 mΩ are shown in this Fig. 11, in a similar manner to the case with Fig. 4. It will be understood that, by contrast to the case with Fig. 4 in which the q axis current Iq diverged after the point b in that figure, in Fig. 11 the q axis current Iq does not diverge, but continues to track the q axis current command value Iq* in a stable manner.

As explained above, with the first embodiment of the present invention, the stabilization compensation signal ΔVd is calculated by the stabilizing compensation calculation unit 13, and, using this, the d axis voltage command value Vdc* outputted from the voltage vector calculation unit 12 is corrected by the correction calculation unit 14. Due to this, it is possible to reduce the current control gain at the rotational frequency of the permanent magnet motor 1, and to stabilize the q axis current Iq. As a result, along with it being possible to suppress torque ripple that is generated by the permanent magnet motor 1 in proportion to the q axis current Iq, it is also possible to suppress deviation of the maximum value of the current flowing in each of the phases of the permanent magnet 1. In particular, if a microcomputer whose clock frequency is 50 MHz or less is employed, and if the permanent magnet motor 1 is controlled so that the fluctuation component ζm of the attenuation coefficient ζ at a rotational frequency of 500 Hz or less becomes less than or equal to 0.5, then advantageous effects such as those described above are prominently obtained by setting the compensation attenuation coefficient ζc to 0.5 or greater.

According to the first embodiment of the present invention as explained above, the following operations and beneficial effects are obtained.

(1) The inverter device comprises the stabilizing compensation calculation unit 13 that calculates a correction amount for reducing the current control gain at the rotational frequency component of the permanent magnet motor 1, and the correction calculation unit 14 that corrects the voltage command outputted from the voltage vector calculation unit 12 on the basis of the correction amount that has thus been calculated by the stabilizing compensation calculation unit 13. And, on the basis of this voltage command that has been corrected by the correction calculation unit 14, DC power is converted to AC power by the voltage coordinate conversion unit 15 and the power converter 2, and this AC power is outputted to the permanent magnet motor 1. Since these arrangements are provided, accordingly it is possible to implement stabilized motor control whose responsiveness is high, irrespective of the magnitude of the electrical time constant of the permanent magnet motor 1 that is the control object and of the calculation period.

(2) The voltage command that is outputted from the voltage vector calculation unit 12 includes the d axis voltage command value Vdc* and the q axis voltage command value Vqc*. And, among these, the correction calculation unit 14 corrects the d axis voltage command value Vdc* and outputs the d axis voltage command value Vdc** after amendment. Furthermore, the voltage coordinate conversion unit 15 and the power converter 2 convert DC power to AC power on the basis of the d axis voltage command value Vdc** after amendment that has been corrected by the correction calculation unit 14 and the q axis voltage command value Vqc* outputted from the voltage vector calculation unit 12. Since these arrangements are provided, accordingly it is possible to perform motor control in a reliable manner by employing per se known vector control.

(3) The stabilizing compensation calculation unit 13 inputs the d axis voltage command value Vdc* and outputs the q axis current Iq to be flowed to the permanent magnet motor 1, and calculates a correction amount so that the attenuation coefficient $\zeta$ of the quadratic delay term for the closed loop transfer function of the control system shown in Fig. 8 becomes greater than or equal to a predetermined value. In other words, the unit 13 calculates a correction amount on the basis of the d axis current deviation that represents the difference between the d axis current command value Id* and the detected d axis current value Idc, the predetermined compensation attenuation coefficient $\zeta c$ that is set in advance, and the q axis voltage command value Vqc*. In concrete terms, a phase compensation signal $\Delta\theta v$ corresponding to the d axis current deviation is obtained by the inexact differential calculation unit 131 by using the differential gain Ta corresponding to the compensation attenuation coefficient c. And, on the basis of the phase compensation signal $\Delta\theta v$ and the q axis voltage command value Vqc*, the value obtained by the sine calculation unit 132 and the multiplication unit 133 by multiplying together the value $\sin(\Delta\theta v)$ of the sine of the phase compensation signal $\Delta\theta v$ and the q axis voltage command value Vqc* is calculated as a correction amount, and the stabilization compensation signal $\Delta Vd$ corresponding to this correction amount is outputted. Since these arrangements are provided, accordingly it is possible for the stabilizing compensation calculation unit 13 to calculate a correction amount that is capable of reliably decreasing the current control gain at the rotational frequency component of the permanent magnet motor 1.

Embodiment #2

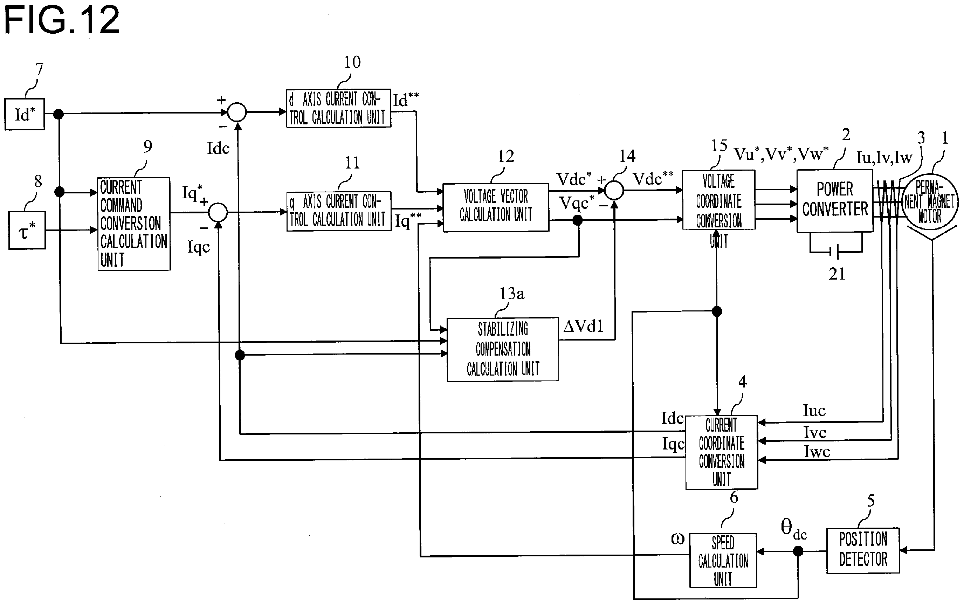

Fig. 12 is a structural block diagram of an inverter device according to a second embodiment of the present invention. As compared to the inverter device according to the first embodiment shown in Fig. 2, this inverter device differs by the feature that, instead of the stabilizing compensation calculation unit 13, a stabilizing compensation calculation unit 13a is provided. This stabilizing compensation calculation unit 13a is built to output a stabilization compensation signal $\Delta Vd1$ to the correction calculation unit 14 by changing the value of the differential gain, which in the first embodiment was a fixed value, according to the d axis current command value Id* or the detected d axis current value Idc. It should be understood that, although the d axis current command value Id* is set to zero at normal times, a d axis current command value Id* that is less than zero is outputted from the d axis current command setting unit 7 when maximum torque control or weak field control is being performed.

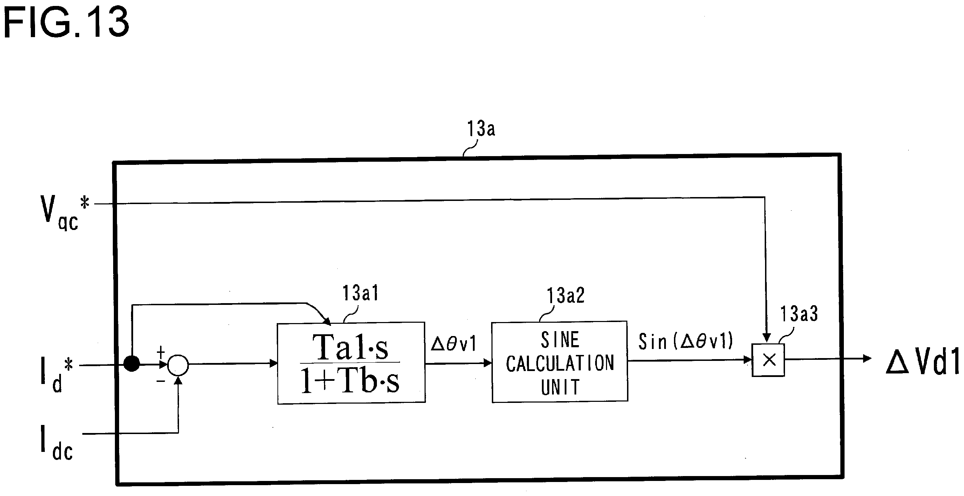

Fig. 13 is a control block diagram for the stabilizing compensation calculation unit 13a. The stabilizing compensation calculation unit 13a comprises an inexact differential calculation unit 13a1, a sine calculation unit 13a2, and a multiplication unit 13a3.

The d axis current command value Id* and the d axis current deviation, which is defined as being the difference between the d axis current command value Id* and the detected d axis current value Idc, are inputted to the inexact differential calculation unit 13a1. And, using the d axis current deviation that has been inputted, in a similar manner to the case with the inexact differential calculation unit 131 of Fig. 7, the inexact differential calculation unit 13a1 calculates and outputs a phase compensation signal $\Delta\theta v1$ according to the calculation shown in Equation (13) below. In Equation (13), Ta1 is the differential time constant (i.e. the differential gain), while Tb1 is the primary delay time constant.
Equation (13)

$$\Delta\theta v1 = \frac{Ta1 \cdot s}{1 + Tb1 \cdot s} \cdot (Id^* - Idc) \quad \cdots(13)$$

In the above Equation (13), Ta1 and Tb1 may be obtained by the following Equations (14), using the electrical constants Ld, Lq, Ke, and R of the permanent magnet motor 1. The inexact differential calculation unit 13a1 calculates the differential gain Ta1 according to Equations (14) on the basis of the d axis current command value Id* that has been inputted. Due to this, it is possible for the differential gain Ta1 to be varied according to the d axis current command value Id*. It should be understood that the primary delay time constant Tb1 is a fixed value, just as in the case of the first embodiment.

Equation (14)

$$\left[\begin{array}{l} Ta1 = \dfrac{2 \cdot \zeta_c \cdot Ld \cdot Lq}{(Ke + Ld \cdot Id^*) \cdot R} \\[2em] Tb1 = \dfrac{Lq}{R} \end{array}\right] \quad \cdots (14)$$

The sine calculation unit 13a2 calculates the value sin(Δθv1) of the sine of the phase compensation signal Δθv1 outputted from the inexact differential calculation unit 13a1. And the multiplication unit 13a3 calculates the correction amount as being the product of the value sin(Δθv1) obtained by the sine calculation unit 13a2 and the q axis command voltage value Vqc*, and outputs a stabilization compensation signal ΔVd1 corresponding to the result of this calculation.

It should be understood that while, in the explanation given above, it was arranged for the differential gain Ta1 to be calculated by the inexact differential calculation unit 13a1 on the basis of the d axis current command value Id*, it would also be acceptable to use the detected d axis current value Idc instead of the d axis current command value Id*. In this case as well, it is possible for the differential gain Ta1 to be varied according to the detected d axis current value Idc, by a calculation method that is similar to the one described above.

As has been explained above, according to this second embodiment of the present invention, the stabilizing compensation calculation unit 13a changes the differential gain Ta1 on the basis of the d axis current command value Id* or the detected d axis current value Idc. Since these arrangements are implemented, accordingly it is possible to keep the gain of the control loop constant, even if current is generated on the d axis. Due to this, it is possible to implement highly responsive motor control in a very stable manner.

Embodiment #3

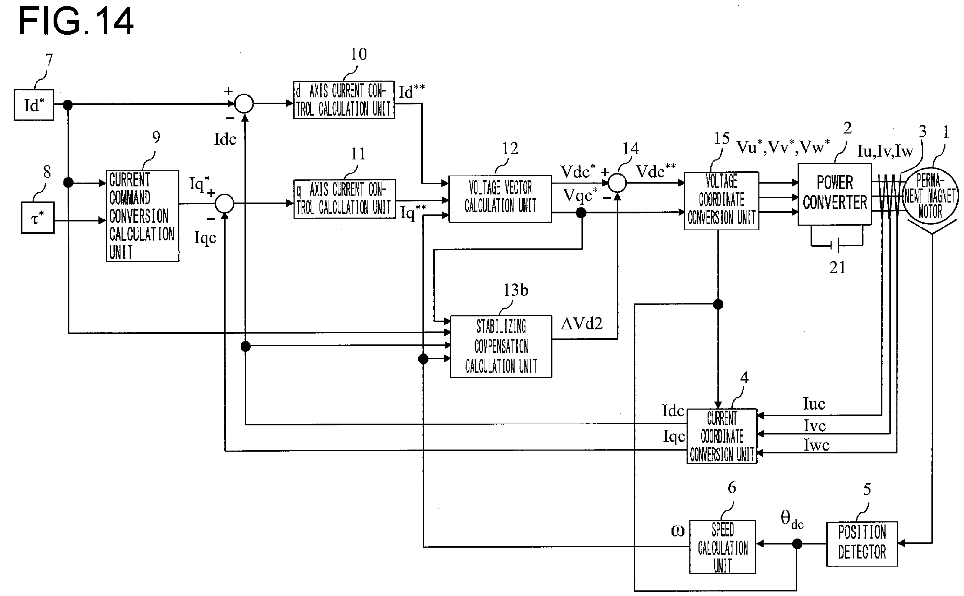

Fig. 14 is a structural block diagram of an inverter device according to a third embodiment of the present invention. As compared to the inverter device according to the first embodiment shown in Fig. 2, this inverter device differs by the feature that, instead of the stabilizing compensation calculation unit 13, a stabilizing compensation calculation unit 13b is provided. This stabilizing compensation calculation unit 13b is built to output a stabilization compensation signal ΔVd2 to the correction calculation unit 14 by changing the positive/negative sign of the correction amount according to the direction of rotation of the permanent magnet motor 1. It should be understood that the detected angular speed value ω from the speed calculation unit 6 is inputted to the stabilizing compensation calculation unit 13b, in addition to the q axis voltage command value Vqc*, the d axis current command value Id*, and the detected d axis current value Idc that are inputted thereto in a similar manner to the case in the first embodiment.

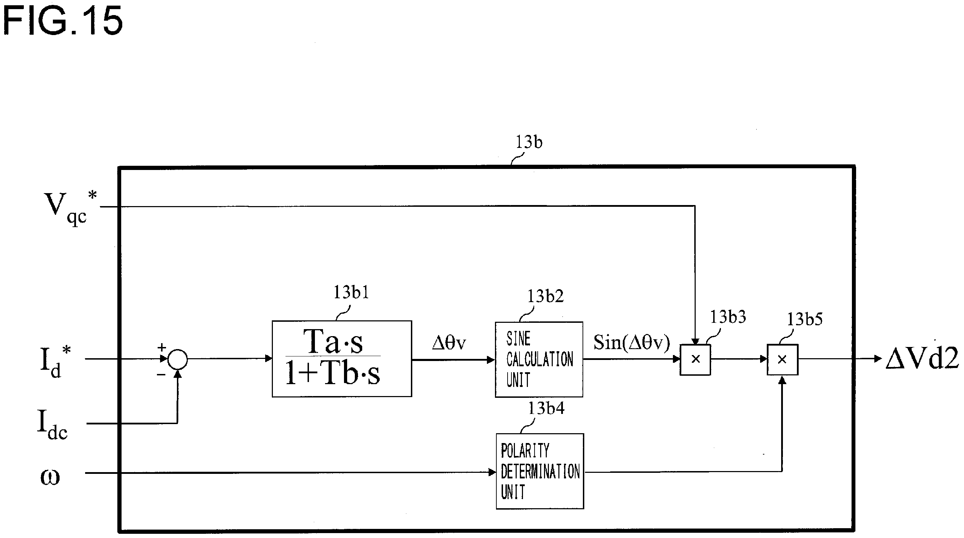

Fig. 15 is a control block diagram for the stabilizing compensation calculation unit 13b. This stabilizing compensation calculation unit 13b comprises an inexact differential calculation unit 13b1, a sine calculation unit 13b2, a first multiplication unit 13b3, a polarity determination unit 13b4, and a second multiplication unit 13b5.

The inexact differential calculation unit 13b1, the sine calculation unit 13b2, and the first multiplication unit 13b3 calculate a correction amount by performing the same calculations, respectively, as the inexact differential calculation unit 131, the sine calculation unit 132, and the first multiplication unit 133 of Fig. 7.

The polarity determination unit 13b4 determines the direction of rotation of the permanent magnet motor 1 on the basis of the detected angular speed value ω that is inputted, and outputs a polarity signal corresponding to the result of this detection. In other words, the unit 13b4 sets its output signal to +1 if the detected angular speed value ω is greater than or equal to zero, and sets its output signal to -1 if ω is less than zero.

The second multiplication unit 13b5 multiplies the signal outputted from the first multiplication unit 13b3 by the value of the output signal from the polarity determination unit 13b4 which is either +1 or -1, and outputs the result of this calculation as the stabilization compensation signal ΔVd2. By doing this, it is possible to change the positive/negative sign of the correction amount that is calculated according to the direction of rotation of the permanent magnet motor 1.

According to the third embodiment of the present invention as explained above, the stabilizing compensation calculation unit 13b changes the positive/negative sign of the correction amount according to the direction of rotation of the permanent magnet motor 1. Since it is arranged to do this, accordingly it is possible to implement highly responsive motor control in a very stable manner, even in the case of a system in which the direction of rotation of the permanent magnet motor 1 is changed over frequently.

Embodiment #4

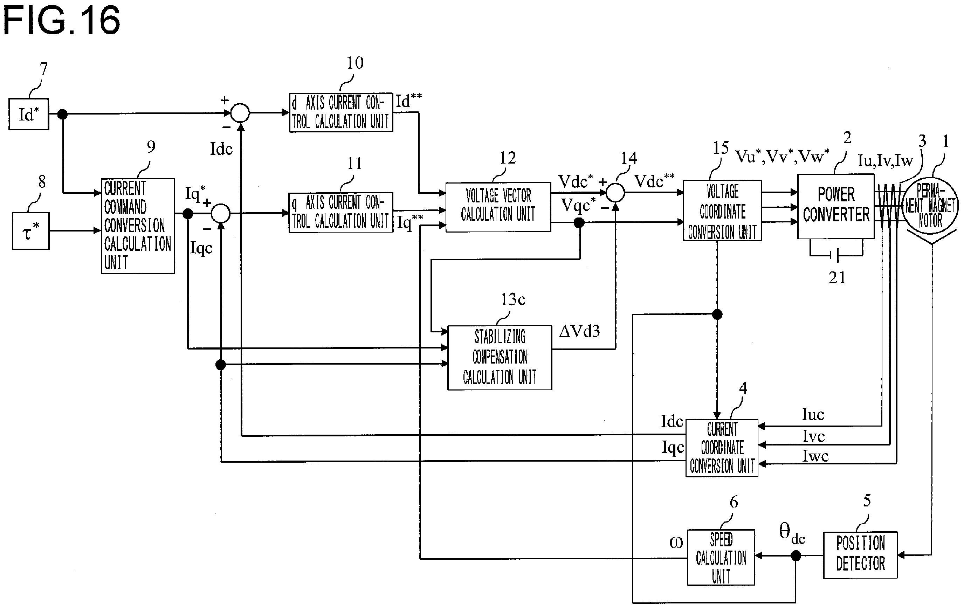

Fig. 16 is a structural block diagram of an inverter device according to a fourth embodiment of the present invention. As compared to the inverter device according to the first embodiment shown in Fig. 2, this inverter device differs by the feature that, instead of the stabilizing compensation calculation unit 13, a stabilizing compensation calculation unit 13c is provided. This stabilizing compensation calculation unit 13c is built to output a stabilization compensation signal ΔVd3 to the correction calculation unit 14 by calculating the value of the correction amount, which in the first embodiment was calculated on the basis of the d axis current command value Id* and the detected d axis current value Idc, on the basis of the q axis current command value Iq* and the detected q axis current value Iqc. It should be understood that the q axis voltage command value Vqc*, the q axis current command value Iq*, and the detected q axis current value Iqc are inputted to the stabilizing compensation calculation unit 13c.

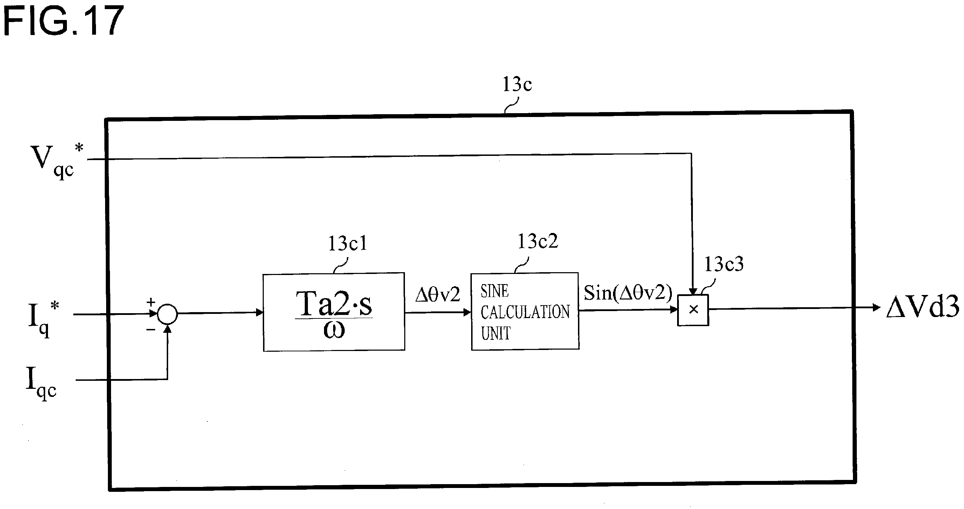

Fig. 17 is a control block diagram for the stabilizing compensation calculation unit 13c. This stabilizing compensation calculation unit 13c comprises an inexact differential calculation unit 13c1, a sine calculation unit 13c2, and a multiplication unit 13c3.

The q axis current deviation, which is defined as being the difference between the q axis current command value Iq* and the detected q axis current value Iqc, is inputted to the inexact differential calculation unit 13c1. And, using the q axis current deviation that has been inputted, the inexact differential calculation unit 13c1 calculates and outputs a phase compensation signal Δθv2 according to the calculation shown in Equation (15) below. In Equation (15), Ta2 is the differential time constant (i.e. the differential gain).
Equation (15)

$$\Delta\theta v2 = \frac{Ta2 \cdot s}{\omega} \cdot (Iq^* - Iqc) \quad \cdots(15)$$

Ta2 in the above Equation (15) can be obtained from the following Equation (16), using the electrical constants Lq and Ke of the permanent magnet motor 1 and the compensation attenuation coefficient ζc described above:
Equation (16)

$$Ta2 = \frac{2 \cdot \zeta_c \cdot Lq}{Ke} \quad \cdots(16)$$

The sine calculation unit 13c2 calculates the value sin(Δθv2) of the sine of the phase compensation signal Δθv2 outputted from the inexact differential calculation unit 13c1. And the multiplication unit 13c3 calculates the correction amount as being the product of the value sin(Δθv2) obtained by the sine calculation unit 13c2 and the q axis command voltage value Vqc*, and outputs a stabilization compensation signal ΔVd3 corresponding to the result of this calculation.

As has been explained above, according to this fourth embodiment of the present invention, the stabilizing compensation calculation unit 13c calculates the correction amount on the basis of the q axis current deviation which is defined as being the difference between the q axis current command value Iq* and the detected q axis current value Iqc, the predetermined compensation attenuation coefficient ζc that is set in advance, and the q axis voltage command value Vqc*. In concrete terms, the phase compensation signal Δθv2 that corresponds to the q axis current deviation is obtained by the inexact differential calculation unit 13c1 by using the differential gain Ta2 that corresponds to the compensation attenuation coefficient ζc. And, on the basis of the phase compensation signal Δθv2 and the q axis voltage command value Vqc*, the product of the value sin(Δθv2) of the sine of the phase compensation signal Δθv2 and the q axis voltage command value Vqc* is calculated by the sine calculation unit 13c2 and the multiplication unit 13c3 as being the correction amount, and a stabilization compensation signal ΔVd3 that corresponds to this correction amount is outputted. Since these arrangements are implemented, accordingly, in a similar manner to the case with the first embodiment, it is possible for a correction amount to be calculated by the stabilizing compensation calculation unit 13c that can reliably reduce the current control gain at the rotational frequency component of the permanent magnet motor 1.

It should be understood that, in the fourth embodiment of the present invention explained above, it would be acceptable to change the differential gain Ta2 according to the q axis current command value Iq* or according to the detected q axis current value Iqc, by a method like that explained in connection with the second embodiment. If this is done, then it is possible to obtain similar operations and beneficial effects to those obtained with the second embodiment. Moreover, it would also be possible to change the positive/negative sign of the correction amount according to the direction of rotation of the permanent magnet motor 1 by a method like that explained in connection with the third embodiment.

Embodiment #5

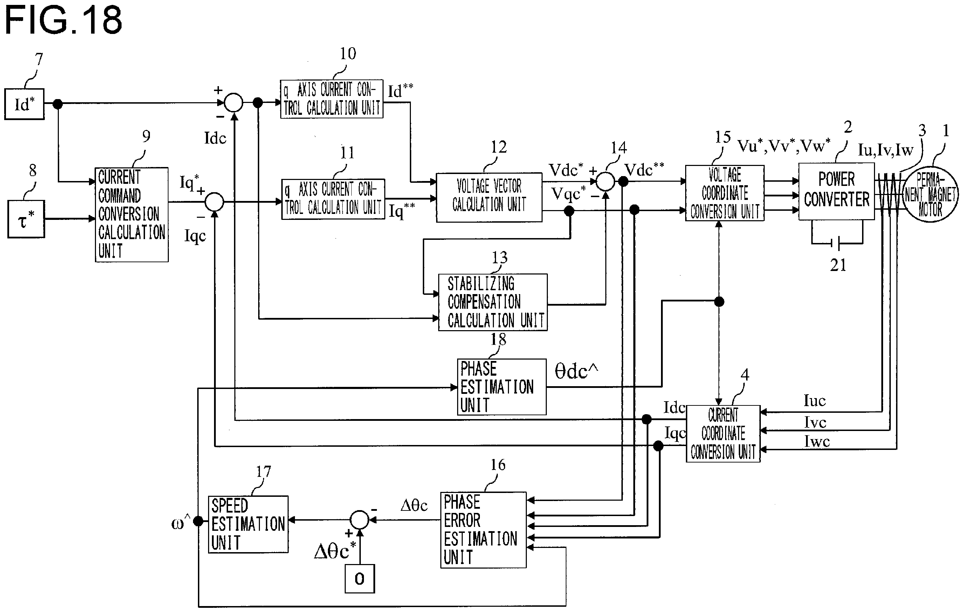

Fig. 18 is a structural block diagram of an inverter device according to a fifth embodiment of the present invention. This inverter device demonstrates an example of application of the present invention to position sensor less control (i.e. resolver less control) in which no position sensor such as a resolver or an encoder or the like is provided; and, as compared to the inverter device according to the first embodiment shown in Fig. 2, this inverter device differs by the feature that a phase error estimation unit 16, a speed estimation unit 17, and a phase estimation unit 18 are further provided, while the position detector 5 and the speed calculation unit 6 are not provided.

The phase error estimation unit 16 performs estimation of a phase error $\Delta\theta c$, this being defined as being the amount of deviation of the phase of the permanent magnet motor 1 with respect to an estimated phase value $\theta dc^\wedge$ that is estimated by the phase estimation unit 18. This phase error estimation unit 16 calculates the phase error $\Delta\theta c$ according to Equation (17) below, on the basis of the d axis voltage command value Vdc** after amendment which is based upon the stabilization compensation signal $\Delta Vd$ from the stabilizing compensation calculation unit 13, the q axis voltage command value Vqc*, the detected d axis current value Idc and the detected q axis current value Iqc from the current coordinate conversion unit 4, and an estimated angular velocity value $\omega^\wedge$ that is estimated by the speed estimation unit 17. It should be understood that the method by which the phase estimation unit 18 estimates the estimated phase value $\theta dc^\wedge$ and the method by which the speed estimation unit 17 estimates the estimated angular velocity value $\omega^\wedge$ will be described below.

Equation (17)

$$\Delta\theta c = \tan^{-1}\left(\frac{Vdc^{**} - R\cdot Idc + \omega^\wedge\cdot Lq\cdot Iqc}{Vqc^* - R\cdot Iqc + \omega^\wedge\cdot Lq\cdot Idc}\right) \quad\cdots(17)$$

The speed estimation unit 17 estimates the estimated angular velocity value $\omega^\wedge$, which is defined as being the estimated value of the angular rotational speed of the permanent magnet motor 1, on the basis of the phase error $\Delta\theta c$ estimated by the phase error estimation unit 16. In concrete terms, the unit 17 calculates an angular velocity that makes the phase error $\Delta\theta c$ become zero, and outputs the result of this calculation as the estimated angular velocity value $\omega^\wedge$.

And the phase estimation unit 18 estimates the estimated phase value $\theta dc^\wedge$ on the basis of the estimated angular velocity value $\omega^\wedge$ as estimated by the speed estimation unit 17. In concrete terms, the unit 18 performs this estimation calculation of the estimated phase value $\theta dc^\wedge$ by integrating the estimated angular velocity value $\omega^\wedge$ over each predetermined calculation period. And the unit 18 outputs the estimated phase value $\theta dc^\wedge$ that has been estimated to the current coordinate conversion unit 4 and to the voltage coordinate conversion unit 15. Each of the current coordinate conversion unit 4 and the voltage coordinate conversion unit 15 performs coordinate conversion by using this estimated phase value $\theta dc^\wedge$ instead of the previously described detected position value $\theta dc$, and outputs each of the detected d axis current value Idc and the detected q axis current value Iqc and the three phase AC voltage command values Vu*, Vv*, and Vw*.

Since, as has been explained above, according to the fifth embodiment of the present invention, it is arranged to provide the phase error estimation unit 16, the speed estimation unit 17, and the phase estimation unit 18 to the inverter device, accordingly it is possible to apply the present invention even to motor control in which the position sensor has been omitted.

It should be understood that, in the fifth embodiment of the present invention explained above, it would also be possible to apply any desired one of the control methods of the first through the fourth embodiments explained above. Furthermore, it would also be acceptable to arrange to apply any desired combination of a plurality of those control methods.

Embodiment #6

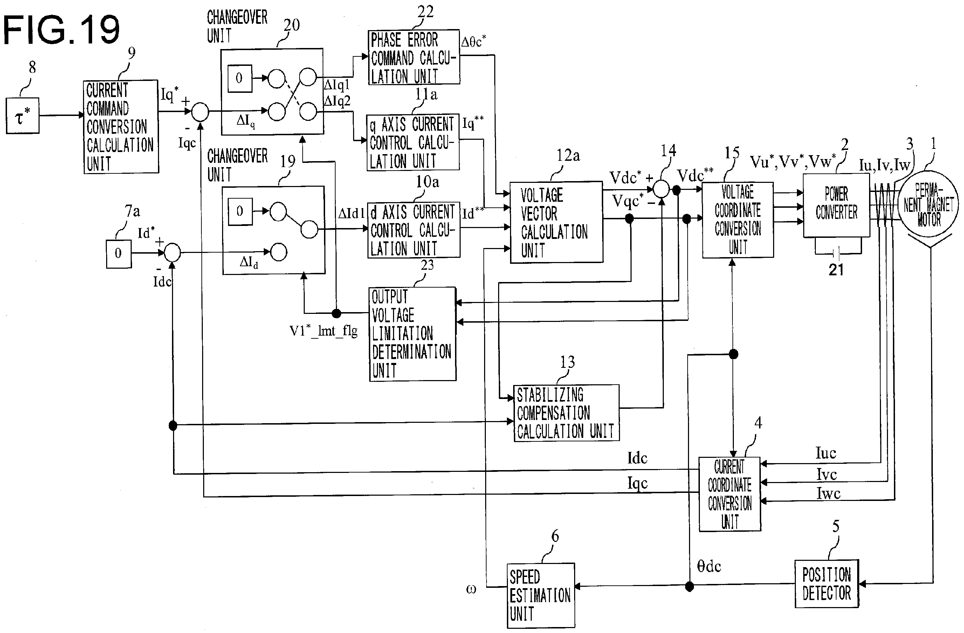

Fig. 19 is a structural block diagram of an inverter device according to a sixth embodiment of the present invention. This inverter device demonstrates an example of application of the present invention to weak field control, and, as compared to the inverter device according to the first embodiment shown in Fig. 2, this inverter device differs by the feature that a d axis current deviation changeover unit 19, a q axis current deviation changeover unit 20, a phase error command calculation unit 22, and an output voltage limitation determination unit 23 are further provided. Moreover, this inverter device also differs by the feature that, instead of the d axis current command setting unit 7, the d axis current control calculation unit 10, the q axis current control calculation unit 11, and the voltage vector calculation unit 12, a d axis current command setting unit 7a, a d axis current control calculation unit 10a, a q axis current control calculation unit 11a, and a voltage vector calculation unit 12a are respectively provided.

The d axis current command setting unit 7a always outputs zero as the d axis current command value Id*.

On the basis of an output voltage limitation flag V1*_lmt_flg that is outputted from the output voltage limitation determination unit 23, the d axis current deviation changeover unit 19 outputs either the d axis current deviation, which is defined as being the difference between the d axis current command value Id* and the detected d axis current value Idc, or zero, to the d axis current control calculation unit 10a as a current deviation signal ΔId1. In concrete terms, if the output voltage limitation flag V1*_lmt_flg is "0", then the unit 19 outputs a d axis current deviation signal ΔId1 corresponding to the d axis current deviation, whereas if the output voltage limitation flag V1*_lmt_flg is "1", then the unit 19 outputs "0" as the d axis current deviation signal ΔId1.

And, on the basis of the output voltage limitation flag V1*_lmt_flg outputted from the output voltage limitation determination unit 23, the q axis current deviation changeover unit 20 outputs either the q axis current deviation, which is defined as being the difference between the q axis current command value Iq* and the detected q axis current value Iqc, or "0" as a q axis current deviation signal ΔIq1 for the phase error command calculation unit 22 and as a q axis current deviation signal ΔIq2 for the q axis current control calculation unit 11a, respectively. In concrete terms, if the output voltage limitation flag V1*_lmt_flg is "0", then the unit 20 outputs "0" as the q axis current deviation signal ΔIq1 for the phase error command calculation unit 22, and outputs the q axis current deviation as the q axis current deviation signal ΔIq2 for the q axis current control calculation unit 11a. On the other hand, if the output voltage limitation flag V1*_lmt_flg is "1", then the unit 20 interchanges the ΔId1 and the ΔIq2 described above. In other words, the unit 20 outputs the q axis current deviation as the q axis current deviation signal ΔIq1 for the phase error command calculation unit 22, and outputs "0" as the q axis current deviation signal ΔIq2 for the q axis current control calculation unit 11a.

The d axis current control calculation unit 10a calculates a second d axis current command value Id** on the basis of the d axis current deviation signal ΔId1 outputted from the d axis current deviation changeover unit 19, and outputs this value to the voltage vector calculation unit 12a. In other words, if the output voltage limitation flag V1*_lmt_flg is "0" and the d axis current deviation signal ΔId1 is equal to the d axis current deviation, then, in a similar manner to the case with the d axis current control calculation unit 10 of Fig. 2, the unit 10a outputs a second d axis current command value Id** that corresponds to the d axis current deviation. On the other hand, if the output voltage limitation flag V1*_lmt_flg is "1" and the d axis current deviation signal ΔId1 is equal to "0", then the unit 10a stops calculation of the second d axis current command value Id**. In this case, the value of the second d axis current command value Id** that was calculated by and outputted from the d axis current control calculation unit 10a during the previous cycle is maintained.

And the q axis current control calculation unit 11a calculates a second q axis current command value Iq** on the basis of the q axis current deviation signal ΔIq2 outputted from the q axis current deviation changeover unit 20, and outputs this value to the voltage vector calculation unit 12a. In other words, if the output voltage limitation flag V1*_lmt_flg is "0" and the q axis current deviation signal ΔId2 is equal to the q axis current deviation, then, in a similar manner to the case with the q axis current control calculation unit 11 of Fig. 2, the unit 11a outputs a second q axis current command value Iq** that corresponds to the q axis current deviation. On the other hand, if the output voltage limitation flag V1*_lmt_flg is "1" and the q axis current deviation signal ΔId2 is equal to "0", then the unit 11a stops calculation of the second q axis current command value Iq**. In this case, the value of the second q axis current command value Iq** that was calculated by and outputted from the q axis current control calculation unit 11a during the previous cycle is maintained.

On the basis of the q axis current deviation signal ΔIq1 outputted from the q axis current deviation changeover unit 20, the phase error command calculation unit 22 calculates a phase error command value Δθc* by predetermined proportion calculation and by integration calculation, and outputs this value to the voltage vector calculation unit 12a. In other words, if the output voltage limitation flag V1*_lmt_flg is "0" and the q axis current deviation signal ΔIq1 is equal to "0", then "0" is outputted as the phase error command value Δθc*. On the other hand, if the output voltage limitation flag V1*_lmt_flg is "1" and the q axis current deviation signal ΔIq1 is equal to the q axis current deviation, then a value of axis error corresponding to the q axis current deviation is outputted as the phase error command value Δθc*.

And the output voltage limitation determination unit 23 calculates an output voltage value V1* for the power converter 2 on the basis of the d axis voltage command value Vdc** after amendment that has been corrected by the correction calculation unit 14 and the q axis voltage command value Vqc* outputted from the voltage vector calculation unit 12. Furthermore, the unit 23 determines whether or not the output voltage value V1* that has thus been calculated has reached a predetermined voltage limitation value V1*max, and if the result is affirmative, determines that the output voltage value V1* is to be a subject for limitation. And, in correspondence to the result of this determination the value "0" or the value "1" is outputted as the output voltage limitation flag V1*_lmt_flg. In other words, if the output voltage value V1* has not arrived at the voltage limitation value V1*max, then the output voltage limitation flag V1*_lmt_flg is set to "0", while if the output voltage value V1* has reached the voltage limitation value V1*max, then the output voltage limitation flag V1*_lmt_flg is set to "1".

The voltage vector calculation unit 12a calculates and outputs a second d axis voltage command value Vdc*** and a second q axis voltage command value Vqc*** on the basis of the second d axis current command value Id** and the second q axis current command value Iq** respectively inputted from the d axis current control calculation unit 10a and the q axis current control calculation unit 11a, the detected angular speed value ω from the speed calculation unit 6, and the phase error command value Δθc from the phase error command calculation unit 22. In concrete terms, the unit 12a calculates the second d axis voltage command value Vdc*** and the second q axis voltage command value Vqc*** by using Equation (18) given below. It should be understood that, in Equation (18), the d axis voltage command value Vdc* and the q axis voltage command value Vqc* may be derived according to Equation (3) given above, using the electrical constants R, Ld, Lq, and Ke of the permanent magnet motor 1 and its detected angular speed value ω. Equation (18)

$$\begin{bmatrix} Vdc^{***} \\ Vqc^{***} \end{bmatrix} = \begin{bmatrix} Vdc^{*} \\ Vqc^{*} \end{bmatrix} \cdot \begin{bmatrix} \cos\Delta\theta c^{*} & -\sin\Delta\theta c^{*} \\ \sin\Delta\theta c^{*} & \cos\Delta\theta c^{*} \end{bmatrix} \quad \cdots (18)$$

According to the calculation of Equation (18) above, if the output voltage value V1* has not reached the voltage limitation value V1*max and so the output voltage limitation flag V1*_lmt_flg is equal to "0", then the voltage vector calculation unit 12a outputs values that are respectively similar to the d axis voltage command value Vdc* and to the q axis voltage command value Vqc* explained in connection with the first embodiment as the second d axis voltage command value Vdc*** and the second q axis voltage command value Vqc***.

Furthermore, when the output voltage value V1* has already reached the voltage limitation value V1*max and the output voltage limitation flag V1*_lmt_flg is equal to "1", the voltage vector calculation unit 12a outputs the d axis voltage command value Vdc* and the q axis voltage command value Vqc*, each corrected by just the phase error command value Δθc* corresponding to the q axis current deviation, as the second d axis voltage command value Vdc*** and the second q axis voltage command value Vqc***. Due to this, via the phase error command value Δθc* that specifies the axis error, in other words via the phase error between the reference axis for control and the axis of the magnetic flux of the permanent magnet motor 1, the unit 12 outputs the second d axis voltage command value Vdc*** and the second q axis voltage command value Vqc*** on the basis of the q axis current deviation so that the q axis current command value Iq* and the detected q axis current value Iqc agree with one another, and thereby controls the output voltage value V1*. With this sort of control, it is possible to implement weak field control in a state in which the d axis current command value Id* is not being generated.

According to the sixth embodiment of the present invention as explained above, when the output voltage value V1* of the power converter 2 reaches the predetermined limit value V1*max, the output voltage value V1* at this time is detected by the output voltage limitation determination unit 23 as being a subject for limitation. At this time, the voltage vector calculation unit 12a performs weak field control by outputting the second d axis voltage command value Vdc*** and the second q axis voltage command value Vqc*** on the basis of the q axis current deviation. Since these arrangements are provided, accordingly it is also possible to apply the present invention to weak field control as well.

It should be understood that, in the sixth embodiment of the present invention explained above, it would also be possible to apply any desired one of the control methods of the first through the fourth embodiments explained above. Moreover, it would also be acceptable to arrange to apply the method explained above in connection with the fifth embodiment, in which position sensor less control is performed. Yet further, it would also be acceptable to arrange to apply any desired plural combination of those control methods.

Variant embodiments

With the first through the sixth embodiments of the present invention explained above, examples of inverter devices were explained in which the second d axis current command value Id** and the second q axis current command value Iq** were respectively obtained on the basis of the d axis current deviation and the q axis current deviation by the d axis current control calculation unit 10 or 10a and by the q axis current control calculation unit 11 or 11a, and in which vector control calculation was performed using these command values. However, it would also be possible to apply the present invention to an inverter device in which this type of current control calculation was not performed, and in which vector control calculation was performed by employing some other method.

For example, it would also be possible to implement vector control calculation by calculating the d axis voltage command value Vdc* and the q axis voltage command value Vqc* according to Equation (19) below, using the d axis current command value Id* (=0) and the primary delay signal Iqctd of the detected q axis current value Iqc, the angular velocity command value $\omega^*$, and the electrical constants of the permanent magnet motor 1. It is also possible to apply the present invention to an inverter device that performs this sort of vector control calculation.

Equation (19)

$$\begin{bmatrix} Vdc^* \\ Vqc^* \end{bmatrix} = \begin{bmatrix} R & -\omega^* \cdot Ld \\ \omega^* \cdot Lq & R \end{bmatrix} \cdot \begin{bmatrix} Idc \\ Iqctd \end{bmatrix} + \begin{bmatrix} 0 \\ \omega^* \cdot Ke \end{bmatrix} \quad \cdots (19)$$

Furthermore, it would also be possible to implement vector control calculation by obtaining the d axis voltage correction value $\Delta Vd^*$ and the q axis voltage correction value $\Delta Vq^*$ on the basis of the d axis current command value Id* and the q axis current command value Iq* and the detected d axis current value Idc and the detected q axis current value Iqc, and by calculating the d axis voltage command value Vdc* and the q axis voltage command value Vqc* according to Equation (20) below, using these voltage correction values, the d axis current command value Id*, the q axis current command value Iq*, the detected angular speed value co, and the electrical constants of the permanent magnet motor 1. It is also possible to apply the present invention to an inverter device that performs this sort of vector control calculation.

Equation (20)

$$\begin{bmatrix} Vdc^* \\ Vqc^* \end{bmatrix} = \begin{bmatrix} R & -\omega^* \cdot Ld \\ \omega^* \cdot Lq & R \end{bmatrix} \cdot \begin{bmatrix} Id^* \\ Iq^* \end{bmatrix} + \begin{bmatrix} 0 \\ \omega^* \cdot Ke \end{bmatrix} + \begin{bmatrix} \Delta Vd^* \\ \Delta Vq^* \end{bmatrix} \quad \cdots (20)$$

Moreover, with the first through the sixth embodiments of the present invention explained above, examples of inverter devices were explained in which the three phase AC currents Iu, Iv, and Iw were detected by using the current detector 3 that was comparatively high in price, and the vector control calculation was performed using these current values. However, the present invention could also be applied to an inverter device that does not employ such a current detector 3, but instead detects the DC current flowing in a single shunt resistor that is fitted to the power converter 2 for excess current detection, and that performs vector control calculation by recreating three phase motor currents Iu^, Iv^, and Iw^ on the basis of the results of this detection. In other words, it would also be possible to apply the present invention to an inverter device that is comparatively low in cost.

Application to a construction machine

The inverter devices explained in terms of the embodiments and variant embodiments described above can be applied to systems of various types that operate by utilizing the drive force of a motor. For example, by using an inverter device to which the present invention has been applied, it is possible to perform motor control for a construction machine such as a wheel loader or a hydraulic shovel or the like that operates an arm or a propulsion apparatus by employing drive force generated by a motor. In other words, a construction machine may comprise an inverter device according to one of the embodiments or variant embodiments described above, and a permanent magnet motor that is driven by AC power outputted from this inverter device.

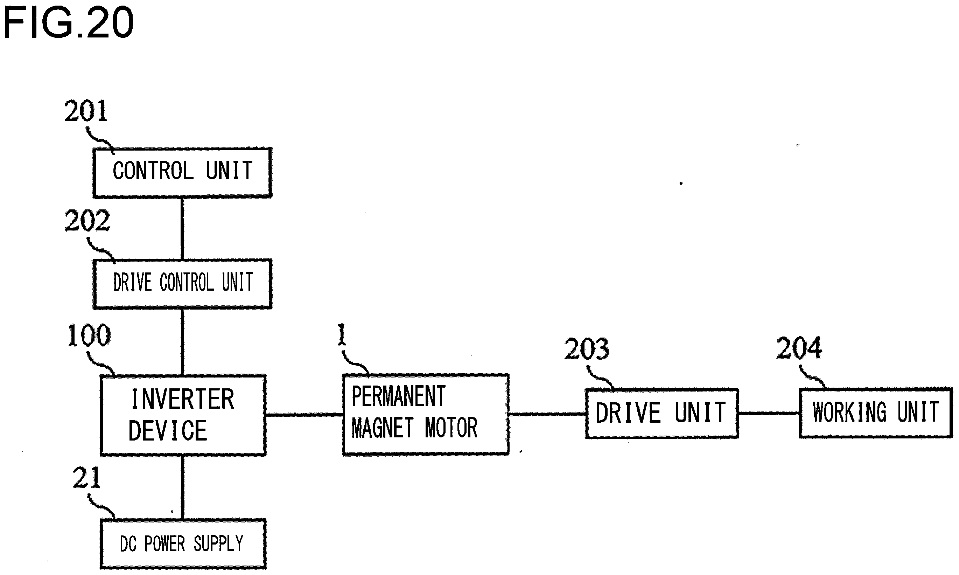

Fig. 20 is a block diagram showing an example of the structure of a construction machine for which motor control is performed by using an inverter device 100 to which the present invention is applied. The construction machine shown by way of example in Fig. 20 is, for example, a wheel loader or a hydraulic shovel or the like, and comprises a permanent magnet motor 1 and a DC power supply 21 as explained in connection with the previously described embodiments, an inverter device 100, a control unit 201, a drive control unit 202, a drive unit 203, and a working unit 204.

The control unit 201 outputs a control signal to the drive control unit 202 according to actuation performed by the operator. The drive control unit 202 is a device corresponding to the higher ranking controller described above, and outputs a command signal to the inverter device 100 on the basis of the operation signal from the operation unit 201.

And, on the basis of the command signal from the drive control unit 202, the inverter device 100 performs vector control calculation of any one of the types explained above in connection with the embodiments and variant embodiments of the present invention, and thereby converts DC power supplied from the DC power supply 21 into AC power that is outputted to the permanent magnet motor 1. And, by being driven to rotate by the AC power outputted from the inverter device 100, the permanent magnet motor 1 generates drive force that is transmitted to the drive unit 203.

The drive unit 203 is a section that performs a predetermined mechanical operation by employing the drive force from the permanent magnet motor 1; for example, it may include a hydraulic pump or a gear mechanism or the like. And the working unit 204 is a section that performs a predetermined task corresponding to mechanical operation of the drive unit 203; for example, it may include an arm of some type, or a propulsion apparatus or the like.

It should be understood that the embodiments and variant embodiments explained above are only examples.

REFERENCE SIGNS LIST

> 1: permanent magnet motor
> 2: power converter
> 3: current detector
> 4: current coordinate conversion unit
> 5: position detector
> 6: speed calculation unit
> 7: d axis current command setting unit
> 8: torque command setting unit
> 9: current command conversion calculation unit
> 10, 10a: d axis current control calculation units
> 11, 11a: q axis current control calculation units
> 12, 12a: voltage vector calculation units
> 13, 13a, 13b, 13c: stabilizing compensation calculation units
> 14: correction calculation unit
> 15: voltage coordinate conversion unit
> 16: phase error estimation unit
> 17: speed estimation unit
> 18: phase estimation unit
> 19: d axis current deviation changeover unit
> 20: q axis current deviation changeover unit
> 21: DC power supply
> 22: phase error command calculation unit
> 23: output voltage limitation determination unit

**Claims**

1. An inverter device configured to control a permanent magnet motor (1), comprising:

> a voltage vector calculation unit (12) configured to output a voltage command;
> a stabilizing compensation calculation unit (13) configured to calculate a correction amount for reducing a current control gain at a rotational frequency component of the permanent magnet motor (1);
> a correction calculation unit (14) arranged to correct the voltage command outputted from the voltage vector calculation unit (12) based upon the correction amount calculated by the stabilizing compensation calculation unit (13); and
> a power conversion unit (2) configured to convert DC power to AC power based upon the voltage command that has been corrected by the correction calculation unit (14), and outputs the AC power to the permanent magnet motor (1), wherein:

>> the voltage command includes a d axis voltage command ($Vdc^*$) and a q axis voltage command ($Vqc^*$);

the correction calculation unit (14) is configured to correct the d axis voltage command (Vdc*);

the power conversion unit (2) is configured to convert DC power to AC power based upon the d axis voltage command (Vdc**) that has been corrected by the correction calculation unit (14) and the q axis voltage command (Vqc*) that is outputted from the voltage vector calculation unit (12); and

the stabilizing compensation calculation unit (13) is configured to calculate the correction amount so that an attenuation coefficient ($\zeta$) of a quadratic delay term in a closed loop transfer function ($G\theta(s)$) of a control system that takes the q axis voltage command as input and takes a q axis current flowing in the permanent magnet motor (1) as output becomes greater than or equal to a predetermined value;

wherein the inverter device further comprises:

a current determination unit (3, 4) configured to detect a d axis current and a q axis current flowing in the permanent magnet motor (1), and configured to output a detected d axis current value (Idc) and a detected q axis current value (Iqc);

wherein the stabilizing compensation calculation unit (13) comprises:

an inexact differential calculation unit (131);
a sine calculation unit (132);
a multiplication unit (133);
the stabilizing compensation calculation unit (13) being configured to calculate the correction amount based upon:

a d axis current deviation which is defined as being a difference between a d axis current command value (Id*) for the d axis current and the detected d axis current value (Idc) or a q axis current deviation which is defined as being a difference between a q axis current command value (Iq*) for the q axis current and the detected q axis current value (Iqc),
a predetermined compensation attenuation coefficient ($\zeta c$) that has been set in advance, and
the q axis voltage command (Vqc*),
wherein
the inexact differential calculation unit (131) is configured to calculate and output, on the basis of either the d axis current deviation or the q axis current deviation, a phase compensation signal ($\Delta\theta v$, $\Delta\theta v1$, $\Delta\theta v2$),
the sine calculation unit (132) is configured to calculate and output, on the basis of the phase compensation signal output by the inexact differential calculation unit (131), the value of sine of the phase compensation signal ($\sin(\Delta\theta v)$, $\sin(\Delta\theta v1)$, $\sin(\Delta\theta v2)$),
the multiplication unit 133 is configured to calculate the correction amount by calculating the product of the sine of the phase compensation signal, output by the sine calculation unit, and the q axis voltage command value (Vqc*).

2. The inverter device according to Claim 1, wherein:
the stabilizing compensation calculation unit (13) obtains a phase compensation signal ($\Delta\theta v$) that corresponds to the d axis current deviation or to the q axis current deviation, using a differential gain corresponding to the compensation attenuation coefficient ($\zeta c$), and calculates the correction amount based upon the phase compensation signal ($\Delta\theta v$) and the q axis voltage command (Vqc*).

3. The inverter device according to Claim 2, wherein:
the stabilizing compensation calculation unit (13) changes the differential gain based upon the d axis current command value (Id*), the q axis current command value (Iq*), the detected d axis current value (Idc), or the detected q axis current value (Iqc).

4. The inverter device according to Claim 2 or Claim 3, wherein:
the stabilizing compensation calculation unit (13) changes a positive/negative sign of the correction amount according to a direction of rotation of the permanent magnet motor (1).

5. The inverter device according to any one of Claims 2 through 4, further comprising:

a phase error estimation unit (16) that estimates a phase error ($\Delta\theta c$) for an estimated phase value ($\theta dc\hat{}$) of the permanent magnet motor (1), wherein the phase error ($\Delta\theta c$) is an amount of deviation of the phase of the permanent magnet motor (1) with respect to the estimated phase value (θdc^);
a speed estimation unit (17) that estimates a rotational speed of the permanent magnet motor (1) based upon the phase error (Δθc) estimated by the phase error estimation unit (16); and
a phase estimation unit (18) that calculates the estimated phase value (θdc^) based upon the rotational speed estimated by the speed estimation unit (17).

6. The inverter device according to any one of Claims 2 through 4, further comprising:
an output voltage limitation determination unit (23) that, when an output voltage of the power conversion unit (2) reaches a predetermined limit value, determines the output voltage as being a subject for limitation, wherein:
when it has been determined by the output voltage limitation determination unit (23) that the output voltage is a subject for limitation, the voltage vector calculation unit (12) performs weak field control by outputting the d axis voltage command and the q axis voltage command based upon the q axis current deviation.

7. A construction machine, comprising:
an inverter device according to Claim 1 or Claim 2; and a permanent magnet motor (1) that is driven by AC power outputted from the inverter device.

8. An electric motor control method for controlling a permanent magnet motor (1), comprising:

outputting a d axis voltage command (Vdc*) and a q axis voltage command (Vqc*);
detecting a d axis current and a q axis current flowing in the permanent magnet motor (1) and outputting a detected d axis current value (Idc) and a detected q axis current value (Iqc);
calculating a correction amount for reduction of current control gain at a rotational frequency component of the permanent magnet motor (1) based upon

a d axis current deviation which is defined as being a difference between a d axis current command value (Id*) for the d axis current and the detected d axis current value (Idc) or a q axis current deviation which is defined as being a difference between a q axis current command value (Iq*) for the q axis current and the detected q axis current value (Iqc),
a predetermined compensation attenuation coefficient (ζc) that has been set in advance, and
the q axis voltage command (Vqc*),

so that an attenuation coefficient (ζ) of a quadratic delay term in a closed loop transfer function (Gθ(s)) of a control system that takes the q axis voltage command (Vqc*) as input and takes a q axis current (Iq) flowing in the permanent magnet motor (1) as output becomes greater than or equal to a predetermined value,
wherein the step of calculating includes:

on the basis of either the d axis current deviation or the q axis current deviation, calculating a phase compensation signal,
on the basis of the phase compensation signal, calculating the value of sine of the phase compensation signal, and
on the basis of the sine of the phase compensation signal, calculating the correction amount by calculating the product of the sine of the phase compensation signal and the q axis voltage command value;

correcting the d axis voltage command (Vdc*) based upon the correction amount;
converting DC power to AC power by a power conversion unit (2) based upon the corrected d axis voltage command (Vdc**) and the q axis voltage command (Vqc*); and
outputting the AC power from the power conversion unit (2) to the permanent magnet motor (1).

**Patentansprüche**

1. Wechselrichtervorrichtung, die zum Steuern eines Permanentmagnetmotors (1) konfiguriert ist, umfassend:

eine Spannungsvektorberechnungseinheit (12), die zum Ausgeben eines Spannungsbefehls konfiguriert ist;
eine Stabilisierungskompensationsberechnungseinheit (13), die konfiguriert ist, ein Korrekturausmaß zum Reduzieren einer Stromsteuerverstärkung bei einer Rotationsfrequenzkomponente des Permanentmagnetmotors (1) zu berechnen;

eine Korrekturberechnungseinheit (14), die ausgelegt ist, den aus der Spannungsvektorberechnungseinheit (12) ausgegebenen Spannungsbefehl auf Basis des Korrekturausmaßes zu korrigieren, das durch die Stabilisierungskompensationsberechnungseinheit (13) berechnet wird; und

eine Leistungsumwandlungseinheit (2), die konfiguriert ist, Gleichstromleistung in Wechselstromleistung auf Basis des Spannungsbefehls umzuwandeln, der durch die Korrekturberechnungseinheit (14) korrigiert worden ist, und die Wechselstromleistung an den Permanentmagnetmotor (1) ausgibt,

wobei der Spannungsbefehl einen d-Achsen-Spannungsbefehl (Vdc*) und einen q-Achsen-Spannungsbefehl (Vqc*) umfasst;

wobei die Korrekturberechnungseinheit (14) konfiguriert ist, den d-Achsen-Spannungsbefehl (Vdc*) zu korrigieren;

wobei die Leistungsumwandlungseinheit (2) konfiguriert ist, Gleichstromleistung in Wechselstromleistung auf Basis des d-Achsen-Spannungsbefehls (Vdc**), der durch die Korrekturberechnungseinheit (14) korrigiert worden ist, und des q-Achsen-Spannungsbefehls (Vcq*), der von der Spannungsvektorberechnungseinheit (12) ausgegeben wird, umzuwandeln; und

wobei die Stabilisierungskompensationsberechnungseinheit (13) konfiguriert ist, das Korrekturausmaß derart zu berechnen, dass ein Abschwächungskoeffizient ($\zeta$) eines quadratischen Verzögerungsterms in einer geschlossenen-Schleifen-Transferfunktion (G$\theta$(s)) eines Steuerungssystems, das den q-Achsen-Spannungsbefehl als Eingabe nimmt, und einen q-Achsen-Strom, der in dem Permanentmagnetmotor (1) fließt, als Ausgabe nimmt, größer als oder gleich einem vorbestimmten Wert wird;

wobei die Wechselrichtervorrichtung ferner Folgendes umfasst:

eine Strombestimmungseinheit (3, 4), die konfiguriert ist, einen in dem Permanentmagnetmotor (1) fließenden d-Achsen-Strom und q-Achsen-Strom zu detektieren, und konfiguriert ist, einen detektierten d-Achsen-Stromwert (Idc) und einen detektierten q-Achsen-Stromwert (Iqc) auszugeben;

wobei die Stabilisierungskompensationsberechnungseinheit (13) Folgendes umfasst:

eine ungenaue-Differenzberechnungseinheit (131);
eine Sinusberechnungseinheit (132);
eine Multiplikationseinheit (133);
wobei die Stabilisierungskompensationsberechnungseinheit (13) konfiguriert ist, das Korrekturausmaß auf Basis von Folgendem zu berechnen:

einer d-Achsen-Stromabweichung, die so definiert ist, dass sie eine Differenz zwischen einem d-Achsen-Strombefehlswert (Id*) für den d-Achsen-Strom und dem detektierten d-Achsen-Stromwert (Idc) ist, oder einer q-Achsen-Stromabweichung, die so definiert ist, dass sie eine Differenz zwischen einem q-Achsen-Strombefehlswert (Iq*) für den q-Achsen-Strom und dem detektierten q-Achsen-Stromwert (Iqc) ist,
einem vorbestimmten Kompensationsabschwächungskoeffizienten ($\zeta$c), der vorab eingestellt worden ist, und
dem q-Achsen-Spannungsbefehl (Vqc*),

wobei die ungenaue-Differenzberechnungseinheit (131) konfiguriert ist, auf Basis entweder der d-Achsen-Stromabweichung oder der q-Achsen-Stromabweichung ein Phasenkompensationssignal ($\Delta\theta$v, $\Delta\theta$v1, $\Delta\theta$v2) zu berechnen und auszugeben,

wobei die Sinusberechnungseinheit (132) konfiguriert ist, auf Basis des von der ungenauen-Differenzberechnungseinheit (131) ausgegebenen Phasenkompensationssignals den Sinuswert des Phasenkompensationssignals (sin($\Delta\theta$v), sin($\Delta\theta$v1), sin($\Delta\theta$v2)) zu berechnen und auszugeben,

wobei die Multiplikationseinheit (133) konfiguriert ist, das Korrekturausmaß durch Berechnen des Produkts des Sinus des von der Sinusberechnungseinheit ausgegebenen Phasenkompensationssignals und des q-Achsen-Spannungsbefehlswerts (Vqc*) zu berechnen.

2. Wechselrichtervorrichtung gemäß Anspruch 1,
wobei die Stabilisierungskompensationsberechnungseinheit (13) ein Phasenkompensationssignal ($\Delta\theta$v) erhält, das der d-Achsen-Stromabweichung oder der q-Achsen-Stromabweichung entspricht, wobei eine Differenzverstärkung, die dem Kompensationsabschwächungskoeffizienten ($\zeta$c) entspricht, verwendet wird, und das Korrekturausmaß auf Basis des Phasenkompensationssignals ($\Delta\theta$v) und des q-Achsen-Spannungsbefehls (Vqc*) berechnet.

3. Wechselrichtervorrichtung gemäß Anspruch 2,

wobei die Stabilisierungskompensationsberechnungseinheit (13) die Differenzverstärkung auf Basis des d-Achsen-Strombefehlswerts (Id*), des q-Achsen-Strombefehlswerts (Iq*), des detektierten d-Achsen-Stromwerts (Idc) oder des detektierten q-Achsen-Stromwerts (Iqc) ändert.

4.  Wechselrichtervorrichtung gemäß Anspruch 2 oder Anspruch 3,
    wobei die Stabilisierungskompensationsberechnungseinheit (13) ein positives/negatives Vorzeichen des Korrekturausmaßes gemäß einer Rotationsrichtung des Permanentmagnetmotors (1) ändert.

5.  Wechselrichtervorrichtung gemäß einem der Ansprüche 2 bis 4, ferner umfassend:

    eine Phasenfehlerschätzeinheit (16), die einen Phasenfehler ($\Delta\theta c$) für einen geschätzten Phasenwert ($\theta dc\wedge$) des Permanentmagnetmotors (1) schätzt, wobei der Phasenfehler ($\Delta\theta c$) ein Abweichungsausmaß der Phase des Permanentmagnetmotors (1) mit Bezug auf den geschätzten Phasenwert ($\theta dc\wedge$) ist;
    eine Drehzahlschätzeinheit (17), die eine Drehzahl des Permanentmagnetmotors (1) auf Basis des durch die Phasenfehlerschätzeinheit (16) geschätzten Phasenfehlers ($\Delta\theta c$) schätzt; und
    eine Phasenschätzeinheit (18), die den geschätzten Phasenwert ($\theta dc\wedge$) auf Basis der durch die Drehzahlschätzeinheit (17) geschätzten Drehzahl berechnet.

6.  Wechselrichtervorrichtung gemäß einem der Ansprüche 2 bis 4, ferner umfassend:

    eine Ausgangsspannungsbegrenzungsbestimmungseinheit (23), die dann, wenn eine Ausgangsspannung der Leistungsumwandlungseinheit (2) einen vorbestimmten Grenzwert erreicht, bestimmt, dass die Ausgangsspannung ein Begrenzungsgegenstand ist,
    wobei dann, wenn durch die Ausgangsspannungsbegrenzungsbestimmungseinheit (23) bestimmt worden ist, dass die Ausgangsspannung ein Begrenzungsgegenstand ist, die Spannungsvektorberechnungseinheit (12) durch Ausgeben des d-Achsen-Spannungsbefehls und des q-Achsen-Spannungsbefehls auf Basis der q-Achsen-Stromabweichung eine schwache-Feldsteuerung ausführt.

7.  Konstruktionsmaschine, umfassend:
    eine Wechselrichtervorrichtung gemäß Anspruch 1 oder Anspruch 2; und einen Permanentmagnetmotor (1), der durch Wechselstromleistung, die von der Wechselrichtervorrichtung ausgegeben wird, angesteuert wird.

8.  Elektromotorsteuerungsverfahren zum Steuern eines Permanentmagnetmotors (1), umfassend:

    Ausgeben eines d-Achsen-Spannungsbefehls (Vdc*) und eines q-Achsen-Spannungsbefehls (Vqc*):

    Detektieren eines d-Achsen-Stroms und eines q-Achsen-Stroms, die in dem Permanentmagnetmotor (1) fließen und Ausgeben eines detektierten d-Achsen-Stromwerts (Idc) und eines detektierten q-Achsen-Stromwerts Iqc);
    Berechnen eines Korrekturausmaßes zur Reduzierung einer Stromsteuerverstärkung bei einer Rotationsfrequenzkomponente des Permanentmagnetmotors (1) auf Basis

    einer d-Achsen-Stromabweichung, die so definiert ist, dass sie eine Differenz zwischen einem d-Achsen-Strombefehlswert (Id*) für den d-Achsen-Strom und dem detektierten d-Achsen-Stromwert (Idc) ist, oder einer q-Achsen-Stromabweichung, die so definiert ist, dass sie eine Differenz zwischen einem q-Achsen-Strombefehlswert (Iq*) für den q-Achsen-Strom und dem detektierten q-Achsen-Stromwert (Iqc) ist,
    eines vorbestimmten Kompensationsabschwächungskoeffizienten ($\zeta c$), der vorab eingestellt worden ist, und des q-Achsen-Spannungsbefehls (Vqc*),
    sodass ein Abschwächungskoeffizient ($\zeta$) eines quadratischen Verzögerungsterms in einer geschlossenen-Schleifen-Transferfunktion (G$\theta$(s)) eines Steuerungssystems, das den q-Achsen-Spannungsbefehl (Vqc*) als Eingabe nimmt, und einen in dem Permanentmagnetmotor (1) fließenden q-Achsen-Strom als Ausgabe nimmt, größer als oder gleich einem vorbestimmten Wert wird,
    wobei der Schritt des Berechnens Folgendes umfasst:

    Berechnen eines Phasenkompensationssignals auf Basis entweder der d-Achsen-Stromabweichung oder der q-Achsen-Stromabweichung,
    Berechnen des Sinuswerts des Phasenkompensationssignals auf Basis des Phasenkompensationssignals, und

Berechnen des Korrekturausmaßes auf Basis des Sinus des Phasenkompensationssignals durch Berechnen des Produkts des Sinus des Phasenkompensationssignals und des q-Achsen-Spannungsbefehlswerts;

Korrigieren des d-Achsen-Spannungsbefehls (Vdc*) auf Basis des Korrekturausmaßes;

Umwandeln von Gleichstromleistung in Wechselstromleistung durch eine Leistungsumwandlungseinheit (2) auf Basis des korrigierten d-Achsen-Spannungsbefehls (Vdc**) und des q-Achsen-Spannungsbefehls (Vqc*); und

Ausgeben der Wechselstromleistung von der Leistungsumwandlungseinheit (2) an den Permanentmagnetmotor (1).

## Revendications

1.  Dispositif onduleur configuré de manière à commander un moteur à aimant permanent (1), comprenant :

    une unité de calcul de vecteur de tension (12) configurée de manière à fournir en sortie une instruction de tension ;
    une unité de calcul de compensation de stabilisation (13) configurée de manière à calculer une quantité de correction en vue de réduire un gain de commande de courant à une composante de fréquence de rotation du moteur à aimant permanent (1) ;
    une unité de calcul de correction (14) agencée de manière à corriger l'instruction de tension fournie en sortie à partir de l'unité de calcul de vecteur de tension (12) sur la base de la quantité de correction calculée par l'unité de calcul de compensation de stabilisation (13) ; et
    une unité de conversion de puissance (2) configurée de manière à convertir une puissance en courant continu en une puissance en courant alternatif sur la base de l'instruction de tension qui a été corrigée par l'unité de calcul de correction (14), et qui fournit en sortie la puissance en courant alternatif au moteur à aimant permanent (1), dans lequel :

    l'instruction de tension inclut une instruction de tension d'axe « d » (Vdc*) et une instruction de tension d'axe « q » (Vqc*) ;
    l'unité de calcul de correction (14) est configurée de manière à corriger l'instruction de tension d'axe « d » (Vdc*) ;
    l'unité de conversion de puissance (2) est configurée de manière à convertir une puissance en courant continu en une puissance en courant alternatif sur la base de l'instruction de tension d'axe « d » (Vdc**) qui a été corrigée par l'unité de calcul de correction (14), et de l'instruction de tension d'axe « q » (Vqc*) qui est fournie en sortie à partir de l'unité de calcul de vecteur de tension (12) ; et
    l'unité de calcul de compensation de stabilisation (13) est configurée de manière à calculer la quantité de correction de sorte qu'un coefficient d'atténuation ($\zeta$) d'un terme de retard quadratique dans une fonction de transfert en boucle fermée (G$\theta$(s)) d'un système de commande qui prend l'instruction de tension d'axe « q » en tant qu'entrée et qui prend un courant d'axe « q » circulant dans le moteur à aimant permanent (1) en tant que sortie devient supérieur ou égal à une valeur prédéterminée ;

    dans lequel le dispositif onduleur comprend en outre :

    une unité de détermination de courant (3, 4) configurée de manière à détecter un courant d'axe « d » et un courant d'axe « q » circulant dans le moteur à aimant permanent (1), et configurée de manière à fournir en sortie une valeur du courant d'axe « d » détecté (Idc) et une valeur du courant d'axe « q » détecté (Iqc) ;
    dans lequel l'unité de calcul de compensation de stabilisation (13) comprend :

    une unité de calcul de différentiel inexact (131) ;
    une unité de calcul de sinus (132) ;
    une unité de multiplication (133) ;
    l'unité de calcul de compensation de stabilisation (13) étant configurée de manière à calculer la quantité de correction sur la base des éléments ci-dessous :

    un écart de courant d'axe « d » qui est défini comme correspondant à une différence entre une valeur d'instruction de courant d'axe « d » (Id*) pour le courant d'axe « d » et la valeur du courant d'axe « d » détecté (Idc), ou un écart de courant d'axe « q » qui est défini comme correspondant à une différence entre une valeur d'instruction de courant d'axe « q » (Iq*) pour le courant d'axe « q » et la valeur du courant d'axe « q » détecté (Iqc) ;

un coefficient d'atténuation de compensation prédéterminé ($\zeta$c) qui a été défini au préalable ; et l'instruction de tension d'axe « q » (Vqc*) ;

dans lequel :

l'unité de calcul de différentiel inexact (131) est configurée de manière à calculer et à fournir en sortie, sur la base soit de l'écart de courant d'axe « d », soit de l'écart de courant d'axe « q », un signal de compensation de phase ($\Delta\theta$v, $\Delta\theta$v1, $\Delta\theta$v2) ;

l'unité de calcul de sinus (132) est configurée de manière à calculer et à fournir en sortie, sur la base du signal de compensation de phase fourni en sortie par l'unité de calcul de différentiel inexact (131), la valeur du sinus du signal de compensation de phase (sin($\Delta\theta$v), sin($\Delta\theta$v1), sin($\Delta\theta$v2)) ;

l'unité de multiplication (133) est configurée de manière à calculer la quantité de correction en calculant le produit du sinus du signal de compensation de phase, fourni en sortie par l'unité de calcul de sinus, et la valeur d'instruction de tension d'axe « q » (Vqc*).

2. Dispositif onduleur selon la revendication 1, dans lequel :

l'unité de calcul de compensation de stabilisation (13) obtient un signal de compensation de phase ($\Delta\theta$v) qui correspond à l'écart de courant d'axe « d » ou à l'écart de courant d'axe « q », en utilisant un gain différentiel correspondant au coefficient d'atténuation de compensation ($\zeta$c), et calcule la quantité de correction sur la base du signal de compensation de phase ($\Delta\theta$v) et de l'instruction de tension d'axe « q » (Vqc*).

3. Dispositif onduleur selon la revendication 2, dans lequel :

l'unité de calcul de compensation de stabilisation (13) modifie le gain différentiel sur la base de la valeur d'instruction de courant d'axe « d » (Id*), de la valeur d'instruction de courant d'axe « q » (Iq*), de la valeur du courant d'axe « d » détecté (Idc) ou de la valeur du courant d'axe « q » détecté (Iqc).

4. Dispositif onduleur selon la revendication 2 ou 3, dans lequel :

l'unité de calcul de compensation de stabilisation (13) modifie un signe positif/négatif de la quantité de correction selon une direction de rotation du moteur à aimant permanent (1).

5. Dispositif onduleur selon l'une quelconque des revendications 2 à 4, comprenant en outre :

une unité d'estimation d'erreur de phase (16) qui estime une erreur de phase ($\Delta\theta$c) pour une valeur de phase estimée ($\theta$dc^) du moteur à aimant permanent (1), dans lequel l'erreur de phase ($\Delta\theta$c) est une quantité d'écart de la phase du moteur à aimant permanent (1) par rapport à la valeur de phase estimée ($\theta$dc^) ;

une unité d'estimation de vitesse (17) qui estime une vitesse de rotation du moteur à aimant permanent (1) sur la base de l'erreur de phase ($\Delta\theta$c) estimée par l'unité d'estimation d'erreur de phase (16) ; et

une unité d'estimation de phase (18) qui calcule la valeur de phase estimée ($\theta$dc^) sur la base de la vitesse de rotation estimée par l'unité d'estimation de vitesse (17).

6. Dispositif onduleur selon l'une quelconque des revendications 2 à 4, comprenant en outre :

une unité de détermination de limitation de tension de sortie (23) qui, lorsqu'une tension de sortie de l'unité de conversion de puissance (2) atteint une valeur limite prédéterminée, détermine la tension de sortie comme étant soumise à une limitation, dans lequel :

lorsqu'il a été déterminé, par l'unité de détermination de limitation de tension de sortie (23), que la tension de sortie est soumise à une limitation, l'unité de calcul de vecteur de tension (12) met en oeuvre une commande de champ faible en fournissant en sortie l'instruction de tension d'axe « d » et l'instruction de tension d'axe « q » sur la base de l'écart de courant d'axe « q ».

7. Engin de chantier, comprenant :

un dispositif onduleur selon la revendication 1 ou 2 ; et un moteur à aimant permanent (1) qui est entraîné par une puissance en courant alternatif fournie en sortie à partir du dispositif onduleur.

8. Procédé de commande de moteur électrique pour commander un moteur à aimant permanent (1), comprenant les étapes ci-dessous consistant à :

fournir en sortie une instruction de tension d'axe « d » (Vdc*) et une instruction de tension d'axe « q » (Vqc*) ;

détecter un courant d'axe « d » et un courant d'axe « q » circulant dans le moteur à aimant permanent (1) et fournir en sortie une valeur du courant d'axe « d » détecté (Idc) et une valeur du courant d'axe « q » détecté (Iqc) ;
calculer une quantité de correction en vue de réduire un gain de commande de courant à une composante de fréquence de rotation du moteur à aimant permanent (1) sur la base des éléments ci-dessous :

un écart de courant d'axe « d » qui est défini comme correspondant à une différence entre une valeur d'instruction de courant d'axe « d » (Id*) pour le courant d'axe « d » et la valeur du courant d'axe « d » détecté (Idc), ou un écart de courant d'axe « q » qui est défini comme correspondant à une différence entre une valeur d'instruction de courant d'axe « q » (Iq*) pour le courant d'axe « q » et la valeur du courant d'axe « q » détecté (Iqc) ;
un coefficient d'atténuation de compensation prédéterminé ($\zeta$c) qui a été défini au préalable ; et
l'instruction de tension d'axe « q » (Vqc*) ; de sorte qu'un coefficient d'atténuation ($\zeta$) d'un terme de retard quadratique dans une fonction de transfert en boucle fermée (G$\theta$(s)) d'un système de commande qui prend l'instruction de tension d'axe « q » (Vqc*) en tant qu'entrée, et qui prend un courant d'axe « q » (Iq) circulant dans le moteur à aimant permanent (1) en tant que sortie, devient supérieur ou égal à une valeur prédéterminée ;
dans lequel l'étape de calcul inclut les étapes ci-dessous consistant à :

sur la base soit de l'écart de courant d'axe « d », soit de l'écart de courant d'axe « q », calculer un signal de compensation de phase ;
sur la base du signal de compensation de phase, calculer la valeur du sinus du signal de compensation de phase ; et
sur la base du sinus du signal de compensation de phase, calculer la quantité de correction en calculant le produit du sinus du signal de compensation de phase et de la valeur d'instruction de tension d'axe « q » ;

corriger l'instruction de tension d'axe « d » (Vdc*) sur la base de la quantité de correction ;
convertir la puissance en courant continu en une puissance en courant alternatif par le biais d'une unité de conversion de puissance (2), sur la base de l'instruction de tension d'axe « d » (Vdc**) corrigée et de l'instruction de tension d'axe « q » (Vqc*) ; et
fournir en sortie la puissance en courant alternatif, à partir de l'unité de conversion de puissance (2), au moteur à aimant permanent (1).

FIG.1

FIG.2

# FIG.3

# FIG.4

# FIG.5

EP 2 963 804 B1

# FIG.6

GAIN CHARACTERISTIC

Fig.4 CHARACTERISTIC

Fig.3 CHARACTERISTIC

UNSTABLE
OVER 0 dB

$\omega_{ACR}/2\pi$
RESPONSE FREQUENCY
OF CURRENT CONTROL

PHASE CHARACTERISTIC

Fig.4 CHARACTERISTIC

Fig.3 CHARACTERISTIC

PHASE CLEARANCE

FREQUENCY [Hz]

POINT c
ROTATIONAL FREQUENCY COMPONENT
333Hz

EP 2 963 804 B1

# FIG.7

FIG.8

$$\frac{Ta \cdot s}{1+Tb \cdot s}$$

$$\frac{1}{R+Ld \cdot s}$$

$$\omega r \cdot Lq$$

$$\omega r \cdot Ld$$

$$\frac{1}{R+Lq \cdot s}$$

$$\overline{Vq}$$

$\Delta \theta_v$

$\Delta Vd$

$-Vd$

Id

Iq

OUTPUT

INPUT

$Vqc*$

# FIG.9

STABILIZING COMPENSATION CALCULATION PORTION (HIGH SPEED CALCULATION)

## FIG.10

GAIN CHARACTERISTIC

NO STABILIZING COMPENSATION CALCULATION UNIT 13

CHARACTERISTIC USING STABILIZING COMPENSATION CALCULATION UNIT 13

PHASE CHARACTERISTIC

NO STABILIZING COMPENSATION CALCULATION UNIT 13

CHARACTERISTIC USING STABILIZING COMPENSATION CALCULATION UNIT 13

FREQUENCY [Hz]

POINT c
ROTATIONAL SPEED COMPONENT 333Hz

EP 2 963 804 B1

# FIG.11

# FIG.12

# FIG.13

$V_{qc}*$

$I_d*$

$I_{dc}$

13a

13a1

$$\frac{Ta1 \cdot s}{1 + Tb \cdot s}$$

$\Delta\theta v1$

13a2

SINE
CALCULATION
UNIT

$Sin(\Delta\theta v1)$

13a3

×

$\Delta Vd1$

EP 2 963 804 B1

FIG.14

# FIG.15

# FIG.16

EP 2 963 804 B1

# FIG.17

EP 2 963 804 B1

# FIG.18

EP 2 963 804 B1

# FIG.19

EP 2 963 804 B1

# FIG.20

EP 2 963 804 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008173006 A
- JP 2012218498 A

- JP 2010172060 A

**Non-patent literature cited in the description**

- An Adaptive Dead-Time Compensation Strategy for Voltage Source Inverter Fed Motor Drives. **FUNABASHI T et al.** IEEE Transactions on Power Electronics. Institute of Electrical and Electronics Engineers, 01 September 2005, vol. 20